# EUROPEAN PATENT APPLICATION

(11) **EP 4 842 067 A1**
(43) Date of publication of application: **18.11.2026**
(21) Application number: 24916110.0
(22) Date of filing: 12.01.2024
(51) Int. Cl.: H04W 40/22

(54) **RELAY COMMUNICATION METHOD, RELAY COMMUNICATION DEVICE, AND WIRELESS COMMUNICATION DEVICE**

(71) Applicant: Shenzhen TCL New Technology Co., Ltd., Shenzhen, Guangdong 518052 (CN)
(72) Inventor: ZHOU, Pei, Shenzhen, Guangdong 518052 (CN); TANG, Xiaoyong, Shenzhen, Guangdong 518052 (CN)
(74) Representative: Murgitroyd & Company
(86) International application number: PCT/CN2024/072159
(87) International publication number: WO 2025/148046

(57) **Abstract**

Embodiments of the present disclosure provide a relay communication method, a relay communication device, and a wireless communication device. The relay communication device comprises a relay function unit and an A-MPDU deaggregation unit, which is used for communicating with the relay function unit. If the A-MPDU deaggregation unit receives a frame sent by an upper-level node, the A-MPDU deaggregation unit performs A-MPDU deaggregation on the received frame. The relay communication method comprises: receiving an MU-RTS-TXS TF sent by a first node, the MU-RTS-TXS TF indicating a transmission opportunity (TXOP) obtained by the first node; scheduling transmission between the relay communication device and a plurality of second nodes and sharing a portion of time of the obtained TXOP with the relay communication device and the plurality of second nodes for use.

## Description

### TECHNICAL FIELD

Embodiments of the present disclosure generally relate to the field of mobile communication technologies, and in particular, to a relay communication method, a relay communication device, and a wireless communication device.

### BACKGROUND

In existing 802.11 series standards, a scenario is typically considered where one Access Point (AP) communicates directly with one or more associated non-AP stations (STAs). However, when an STA is far from the AP, large path loss or severe interference may lead to poor communication link quality, such as a low Signal-to-Noise Ratio (SNR) or Signal-to-Interference-plus-Noise Ratio (SINR), thereby affecting the communication rate. Therefore, in Wi-Fi 8, improving the throughput for distant users through a relay has become a research focus. Designing a high-reliability and low-latency relay architecture and protocol is an urgent problem to be solved. Accordingly, a relay communication method, a relay communication device, and a wireless communication device are needed to improve upon existing technologies.

### SUMMARY

Embodiments of the present disclosure provide a relay communication method, a relay communication device, and a wireless communication device to address problems in the prior art and other issues.

An embodiment of the present disclosure provides a relay communication device, including: a relay function unit configured to perform local reception or selective forwarding of a Media Access Control (MAC) Protocol Data Unit (MPDU) between an upstream node and a downstream node based on a Destination Address (DA) of a received frame; and an Aggregated Media Access Control Protocol Data Unit (A-MPDU) de-aggregation unit configured to communicate with the relay function unit, wherein if the A-MPDU de-aggregation unit receives the frame sent by the upstream node, the A-MPDU de-aggregation unit performs A-MPDU de-aggregation on the received frame.

According to the above technical solution, the relay communication device includes a relay function unit and an A-MPDU de-aggregation unit configured to communicate with the relay function unit. The A-MPDU de-aggregation unit performs A-MPDU de-aggregation on a frame received from the upstream node, thereby enabling the relay communication device to implement a high-reliability and low-latency relay architecture and protocol.

An embodiment of the present disclosure provides a relay communication method, performed by a relay communication device, the method including: receiving a Multi-User Request-to-Send Transmission Opportunity Sharing Trigger Frame (MU-RTS-TXSTF) sent by a first node, wherein the MU-RTS-TXSTF indicates a transmission opportunity (TXOP) obtained by the first node; and scheduling a transmission between the relay communication device and a plurality of second nodes and sharing a portion of the obtained TXOP for use by the relay communication device and the plurality of second nodes.

According to the above technical solution, a transmission between the relay communication device and a plurality of second nodes is scheduled, and a portion of the obtained TXOP is shared for use by the relay communication device and the plurality of second nodes. This enables the implementation of relay link scheduling and transmission designs for different scenarios.

An embodiment of the present disclosure provides a relay communication method, performed by a relay communication device, the method including: sending a Multi-User Request-to-Send Transmission Opportunity Sharing Trigger Frame (MU-RTS-TXSTF) to at least one first node and/or at least one second node, wherein the MU-RTS-TXSTF indicates that after the relay communication device obtains a transmission opportunity (TXOP), a transmission between the at least one first node and the at least one second node is scheduled and a portion of the obtained TXOP is shared for use by the at least one first node and the at least one second node, wherein at least one of the first node, the relay communication device, and the at least one second node is plural.

According to the above technical solution, a transmission between the at least one first node and the at least one second node is scheduled, and a portion of the obtained TXOP is shared for use by the at least one first node and the at least one second node, wherein at least one of the first node, the relay communication device, and the at least one second node is plural in number. This enables the implementation of relay link scheduling and transmission designs for different scenarios.

An embodiment of the present disclosure provides a relay communication method, performed by a first node, the method including: sending a Multi-User Request-to-Send Transmission Opportunity Sharing Trigger Frame (MU-RTS-TXSTF) to a relay communication device, wherein the MU-RTS-TXSTF indicates a transmission opportunity (TXOP) obtained by the first node; and scheduling a transmission between the relay communication device and a plurality of second nodes and sharing a portion of the obtained TXOP for use by the relay communication device and the plurality of second nodes.

According to the above technical solution, a transmission between the relay communication device and a plurality of second nodes is scheduled, and a portion of the obtained TXOP is shared for use by the relay communication device and the plurality of second nodes. This enables the implementation of relay link scheduling and transmission designs for different scenarios.

An embodiment of the present disclosure provides a relay communication method, performed by a first node, the method including: receiving a Multi-User Request-to-Send Transmission Opportunity Sharing Trigger Frame (MU-RTS-TXSTF) sent by a relay communication device, wherein the MU-RTS-TXSTF indicates that after the relay communication device obtains a transmission opportunity (TXOP), a transmission between the first node and at least one second node is scheduled and a portion of the obtained TXOP is shared for use by the first node and the at least one second node, wherein at least one of the first node, the relay communication device, and the at least one second node is plural in number.

According to the above technical solution, a transmission between the first node and at least one second node is scheduled, and a portion of the obtained TXOP is shared for use by the first node and the at least one second node, wherein at least one of the first node, the relay communication device, and the at least one second node is plural. This enables the implementation of relay link scheduling and transmission designs for different scenarios.

An embodiment of the present disclosure provides a wireless communication device, including: a processor; and a memory configured to store a computer program, wherein the processor is configured to execute the computer program stored in the memory to perform the relay communication method described above.

An embodiment of the present disclosure provides a relay communication device, including a processor and a memory. The memory is configured to store a computer program, and the processor is configured to execute the computer program stored in the memory to perform the relay communication method described above.

An embodiment of the present disclosure provides a first node, including a processor and a memory. The memory is configured to store a computer program, and the processor is configured to execute the computer program stored in the memory to perform the relay communication method described above.

An embodiment of the present disclosure provides a chip for implementing the relay communication method described above.

Specifically, the chip includes a processor configured to execute a computer program from a memory to cause a device in which the chip is installed to perform the relay communication method described above.

An embodiment of the present disclosure provides a computer-readable storage medium storing a computer program that, when executed by a computer, causes the computer to perform the relay communication method described above.

An embodiment of the present disclosure provides a computer program product including computer program instructions that, when executed by a computer, cause the computer to perform the relay communication method described above.

An embodiment of the present disclosure provides a computer program that, when executed on a computer, causes the computer to perform the relay communication method described above.

According to the above technical solutions, the relay communication device includes a relay function unit and an A-MPDU de-aggregation unit configured to communicate with the relay function unit, wherein the A-MPDU de-aggregation unit performs A-MPDU de-aggregation on a frame received from the upstream node, thereby enabling the relay communication device to implement a high-reliability and low-latency relay architecture and protocol. Furthermore, a transmission between the relay communication device and a plurality of second nodes is scheduled, and a portion of the obtained TXOP is shared for use by the relay communication device and the plurality of second nodes. This enables the implementation of relay link scheduling and transmission designs for different scenarios.

### BRIEF DESCRIPTION OF THE DRAWINGS

The drawings described herein are provided for a further understanding of the present disclosure and constitute a part of the present disclosure. The illustrative embodiments of the present disclosure and their descriptions are used to explain the present disclosure and do not constitute an undue limitation on the present disclosure. In the drawings:
FIG. 1A is a schematic diagram of a relay communication system architecture according to an embodiment of the present disclosure.
FIG. 1B is a schematic diagram of a relay communication system architecture according to an embodiment of the present disclosure.
FIG. 1C is a schematic diagram of a relay communication system architecture according to an embodiment of the present disclosure.
FIG. 2A is a schematic flowchart of a relay communication method according to an embodiment of the present disclosure.
FIG. 2B is a schematic flowchart of a relay communication method according to an embodiment of the present disclosure.
FIG. 2C is a schematic flowchart of a relay communication method according to an embodiment of the present disclosure.
FIG. 2D is a schematic flowchart of a relay communication method according to an embodiment of the present disclosure.
FIG. 3 is a schematic diagram of a network topology for relay transmission according to an embodiment of the present disclosure.
FIG. 4A is a schematic diagram of a scenario for scheduling and transmission of relay communication according to an embodiment of the present disclosure.
FIG. 4B is a schematic diagram of a scenario for scheduling and transmission of relay communication according to an embodiment of the present disclosure.
FIG. 4C is a schematic diagram of a scenario for scheduling and transmission of relay communication according to an embodiment of the present disclosure.
FIG. 4D is a schematic diagram of a scenario for scheduling and transmission of relay communication according to an embodiment of the present disclosure.
FIG. 4E is a schematic diagram of a scenario for scheduling and transmission of relay communication according to an embodiment of the present disclosure.
FIG. 4F is a schematic diagram of a scenario for scheduling and transmission of relay communication according to an embodiment of the present disclosure.
FIG. 4G is a schematic diagram of a scenario for scheduling and transmission of relay communication according to an embodiment of the present disclosure.
FIG. 4H is a schematic diagram of a scenario for scheduling and transmission of relay communication according to an embodiment of the present disclosure.
FIG. 4I is a schematic diagram of a scenario for scheduling and transmission of relay communication according to an embodiment of the present disclosure.
FIG. 5 is a schematic structural diagram of a wireless communication device according to an embodiment of the present disclosure.
FIG. 6 is a schematic structural diagram of a chip according to an embodiment of the present disclosure.
FIG. 7 is a schematic block diagram of a wireless communication system according to an embodiment of the present disclosure.

### DETAILED DESCRIPTION

The disclosure will now be described in detail with reference to the accompanying drawings and examples. Apparently, the described embodiments are only a part of the embodiments of the present disclosure, not all of the embodiments. All other embodiments obtained by a person of ordinary skill in the art based on the embodiments of the present disclosure without creative efforts shall fall within the protection scope of the present disclosure.

It should be understood that the term "and/or" herein merely describes an association relationship between associated objects, indicating that three relationships can exist. For example, A and/or B can represent three cases: A exists alone, both A and B exist, and B exists alone. In addition, the character "/" herein generally indicates an "or" relationship between the preceding and succeeding associated objects. In some embodiments of the present disclosure, an AP may represent an AP STA or an AP MLD; that is, the AP described herein may be used interchangeably with AP STA or AP MLD. A STA may represent an AP STA or a non-AP STA, or an AP MLD or a non-AP MLD; that is, the STA described herein may be used interchangeably with AP STA or AP MLD or non-AP STA or non-AP MLD. A non-AP STA may represent a non-AP MLD; that is, the non-AP STA described herein may be used interchangeably with non-AP MLD.

To facilitate understanding of the technical solutions of the embodiments of the present disclosure, related technical solutions are described below.

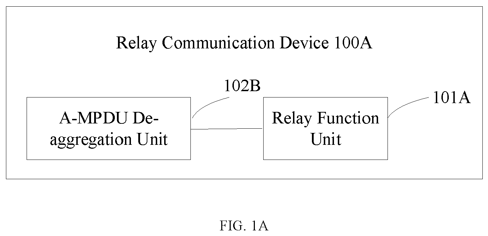

The technical solutions of the embodiments of the present disclosure can be applied to various relay communication systems. As an example, a relay communication device 100A to which an embodiment of the present disclosure is applied is shown in FIG. 1A. The relay communication device 100A may include a relay function unit 101A. The relay function unit 101A may perform local reception or selective forwarding of a Media Access Control Protocol Data Unit (MPDU) between an upstream node and a downstream node based on a Destination Address (DA) of a received frame. The frame may be a unicast frame, a broadcast frame, or a multicast frame.

The relay communication device 100A further includes an Aggregate Media Access Control Protocol Data Unit (A-MPDU) de-aggregation unit 102A. The A-MPDU de-aggregation unit 102A is configured to communicate with the relay function unit 101A. If the A-MPDU de-aggregation unit 102A receives the frame sent by the upstream node, the A-MPDU de-aggregation unit 102A performs A-MPDU de-aggregation on the received frame.

According to the foregoing technical solution, the relay communication device 100A includes the relay function unit 101A and the A-MPDU de-aggregation unit 102A for communicating with the relay function unit 101A. The A-MPDU de-aggregation unit 102A performs A-MPDU de-aggregation on the frame received from the upstream node, thereby enabling the relay communication device 100A to implement a high-reliability and low-latency Relay architecture and protocol.

Specifically, in some embodiments of the present disclosure, after the relay communication device 100A receives a unicast frame, the relay function unit 101A acts as follows: the relay function unit 101A checks an (A-)MPDU received at the relay via a Wireless Medium (WM). If the DA indicated therein matches the relay address, the (A-)MPDU is passed to a local higher-layer entity. Otherwise, the (A-)MPDU is forwarded to the next node via the WM using a four-address frame format or an A-MPDU format.

Specifically, in some embodiments of the present disclosure, after the relay communication device 100A receives a broadcast frame or a multicast frame, the relay function unit 101A acts as follows: an (A-)MPDU that is received at the relay via the WM and has a group address as its destination address is passed by the relay function unit 101A and then forwarded to the next node via the WM using a four-address frame format or an A-MPDU format.

In some embodiments of the present disclosure, the relay communication device 100A may be a non-Multi-Link Device (non-MLD) station (STA) or a Multi-Link Device (MLD) STA.

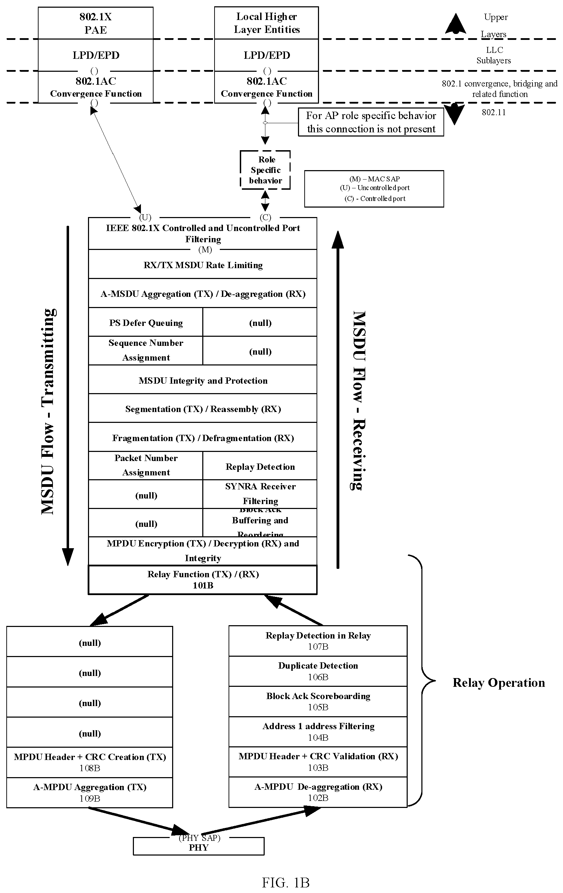

As shown in FIG. 1B, the relay communication device 100B may be a non-Multi-Link Device (non-MLD) station (STA).

In some embodiments of the present disclosure, the relay communication device 100B includes a relay function unit 101B. The relay function unit 101B may perform local reception or selective forwarding of a Media Access Control Protocol Data Unit (MPDU) between an upstream node and a downstream node based on a received Destination Address (DA). The relay communication device 100B further includes an Aggregate Media Access Control Protocol Data Unit (A-MPDU) de-aggregation unit 102B. The A-MPDU de-aggregation unit 102B is configured to communicate with the relay function unit 101B. If the A-MPDU de-aggregation unit 102B receives the frame sent by the upstream node, the A-MPDU de-aggregation unit 102B performs A-MPDU de-aggregation on the received frame. The frame may be a unicast frame, a broadcast frame, or a multicast frame.

According to the foregoing technical solution, the relay communication device 100B includes the relay function unit 101B and the A-MPDU de-aggregation unit 102B for communicating with the relay function unit 101B. The A-MPDU de-aggregation unit 102B performs A-MPDU de-aggregation on the frame received from the upstream node, thereby enabling the relay communication device 100B to implement a high-reliability and low-latency Relay architecture and protocol.

In some embodiments of the present disclosure, the relay communication device 100B further includes an MPDU header and Cyclic Redundancy Check (CRC) verification unit 103B, configured to communicate with the A-MPDU de-aggregation unit 102B. If the MPDU header and CRC verification unit 103B receives the frame sent by the upstream node via the A-MPDU de-aggregation unit 102B, the MPDU header and CRC verification unit 103B performs MPDU header and CRC verification on the received frame.

In some embodiments of the present disclosure, the relay communication device 100B further includes an address filtering unit 104B, configured to communicate with the MPDU header and CRC verification unit 103B. If the address filtering unit 104B receives the frame sent by the upstream node via the MPDU header and CRC verification unit 103B, the address filtering unit 104B performs address filtering on the received frame.

In some embodiments of the present disclosure, the relay communication device 100B further includes a block acknowledgement scoreboard 105B, configured to communicate with the address filtering unit 104B. If the block acknowledgement scoreboard 105B receives the frame sent by the upstream node via the address filtering unit 104B, the block acknowledgement scoreboard 105B performs acknowledgement scoring on the received frame.

In some embodiments of the present disclosure, the relay communication device 100B further includes a duplicate detection unit 106B, configured to communicate with the block acknowledgement scoreboard 105B. If the duplicate detection unit 106B receives the frame sent by the upstream node via the block acknowledgement scoreboard 105B, the duplicate detection unit 106B performs duplicate detection on the received frame.

In some embodiments of the present disclosure, the relay communication device 100B further includes a replay detection unit 107B, configured to communicate with the duplicate detection unit 106B. If the replay detection unit 107B receives the frame sent by the upstream node via the duplicate detection unit 106B, the replay detection unit 107B performs replay detection on the received frame. The replay detection unit 107B is configured to receive a data or robust management frame from another station (STA) to detect whether the received data or robust management frame is an unauthorized retransmission. That is, the STA may be an AP STA or a non-AP STA.

In some embodiments of the present disclosure, the relay communication device 100B further includes an MPDU header and CRC creation unit 108B, configured to communicate with the relay function unit 101B. If the MPDU header and CRC creation unit 108B receives the frame sent by the downstream node via the relay function unit 101B, the MPDU header and CRC creation unit 108B performs MPDU header and CRC creation on the received frame.

In some embodiments of the present disclosure, the relay communication device 100B further includes an A-MPDU aggregation unit 109B, configured to communicate with the MPDU header and CRC creation unit 108B. If the A-MPDU aggregation unit 109B receives the frame sent by the downstream node via the MPDU header and CRC creation unit 108B, the A-MPDU aggregation unit 109B performs A-MPDU aggregation on the received frame.

In some embodiments of the present disclosure, the relay communication device 100B further includes an MPDU encryption and integrity unit 110B, and the relay function unit 101B is configured between the MPDU encryption and integrity unit 110B and the MPDU header and CRC creation unit 108B to perform transmission. In some embodiments of the present disclosure, the relay communication device 100B further includes an MPDU decryption and integrity unit 111B, and the relay function unit 101B is configured between the replay detection unit 107B and the MPDU decryption and integrity unit 111B to perform reception.

Specifically, in some embodiments of the present disclosure, as shown in FIG. 1B, an architecture (data plane architecture) of the relay communication device 100B is shown for a case where the device is a non-MLD HT/HE/EHT STA. This architecture adds a relay function unit 101B compared to the data plane architecture of a traditional non-MLD HT/HE/EHT STA. In some embodiments of the present disclosure, a non-MLD HT/HE/EHT STA may be an AP STA or a non-AP STA. That is, the relay communication device 100B can be a STA with an AP function, i.e., an AP STA; the relay communication device 100B can also be a STA without an AP function, i.e., a non-AP STA. The relay function unit 101B is located between the MPDU Encryption (TX) and Integrity Unit 110B and the MPDU Header + CRC Creation (TX) Unit 108B during transmission. The relay function unit 101B is located between the Replay Detection in Relay Unit 107B and the MPDU Decryption (RX) and Integrity Unit 111B during reception.

The Relay Function Unit 101B is configured to perform local reception or selective forwarding of an (A-)MPDU between an upstream node and a downstream node based on the Destination Address (DA) of a received frame. If the DA of the received frame is the relay communication device 100B (the relay itself), local reception is performed for upper MAC layer operations such as MPDU Decryption, and the frame is no longer forwarded. If the DA of the received frame is another node, fragments of the received frame are reselected at the relay function unit 101B and then forwarded for next-step processing, such as performing MPDU Header and CRC Creation, and A-MPDU Aggregation. The reselection rule is to forward only successfully received frame fragments based on the result from the block acknowledgement scoreboard 105B (Block Ack Scoreboarding).

In addition, the replay detection unit 107B and its operation are a unit and a step newly added compared to the architecture of a traditional HT/HE/EHT STA, with main functions as follows: the replay detection mechanism defines a method by which a relay receiving a data or robust management frame from another STA can detect whether the received frame is an unauthorized retransmission. This replay protection mechanism is provided for data frames of STAs that use the Robust Security Network Association (RSNA) mechanism. A robust management frame replay protection mechanism is also provided for STAs that use Counter Mode with Cipher-block chaining Message authentication code Protocol (CCMP), Galois Counter Mode Protocol (GCMP), and Broadcast/multicast Integrity Protocol (BIP). In some embodiments of the present disclosure, a STA includes an AP STA or a non-AP STA. That is, a STA can be an AP STA or a non-AP STA.

Specifically, in some embodiments of the present disclosure, as shown in FIG. 1B, the relay communication device 100B receives frames sent by an upstream node. An example flow in the data plane architecture is as follows:
1) Perform A-MPDU De-aggregation.
2) Perform MPDU Header + CRC Validation.
3) Perform Address1 address filtering.
4) Perform Block Ack Scoreboarding.
5) Perform Duplicate Detection (optional step).
6) Perform Replay Detection (optional step).

Then, the relay communication device 100B repackages the received data at the relay function unit 101B and forwards it to the downstream node according to an indication of a relevant frame. An example flow in the data plane architecture is as follows:
1) Perform MPDU Header + CRC Creation.
2) Perform A-MPDU Aggregation.

The technical effect that can be achieved by this architecture design is as follows: after the relay communication device 100B receives data sent from an upstream node, it only needs to de-aggregate the A-MPDU, then validate the MPDU, and then forward the data through the relay function unit 101B via a few simple steps (as described previously). After the MPDU is re-aggregated, it is sent to a downstream node without requiring other Media Access Control (MAC) processing (such as an MPDU Decryption/Encryption Unit or a Block Ack Buffering and Reordering unit). Therefore, processing time of the relay data package may be reduced, and low-delay relay operation may be achieved.

It is worth noting that FIG. 1B also illustrates the data plane architecture of the relay communication device 100B acting as a traditional Access Point (AP)/non-AP station (STA) (i.e., does not perform the relay function). In this case, the relay function unit 101B and the replay detection unit 107B (located between the relay function unit 101B and the duplicate detection unit 106B), and their associated steps, are not present in the architecture shown in FIG. 1B. The remaining steps are not necessarily all performed; only some of them may be performed according to different requirements.

Specifically, in some embodiments of the present disclosure, after the relay communication device 100B receives a unicast frame, the behavior of the relay function unit 101B is as follows: the relay function unit 101B checks the (A-)MPDU received at the relay via the Wireless Medium (WM). If the Destination Address (DA) matches the relay address, the (A-)MPDU is passed to a local higher-layer entity. Otherwise, the (A-)MPDU is forwarded to the next node via the WM using a four-address frame format or an A-MPDU format.

Specifically, in some embodiments of the present disclosure, after the relay communication device 100B receives a broadcast or multicast frame, the behavior of the relay function unit 101B is as follows: an (A-)MPDU that is received at the relay via the WM and has a group address as its destination address is processed by the relay function unit 101B and then forwarded to the next node via the WM using a four-address frame format or an A-MPDU format.

Specifically, for a block acknowledgment protocol that is not a protected block acknowledgment protocol, the "MPDU Decryption (RX) and Integrity" process (performed by the MPDU decryption and integrity unit 111B) and the "Block Ack Buffering and Reordering" process can be performed in any order (RX). For a protected block acknowledgment protocol, these two processes should be performed in the order shown.

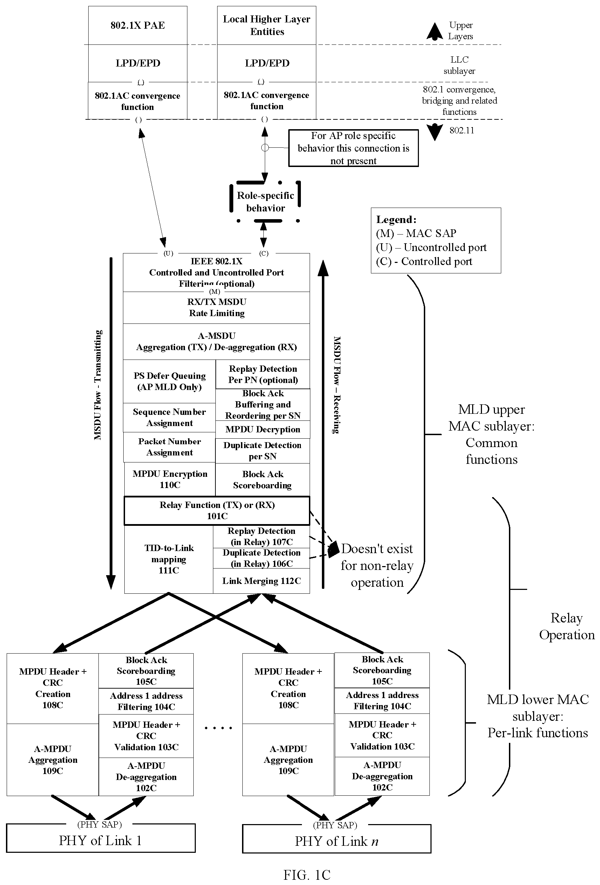

As shown in FIG. 1C, the relay communication device 100C may be a Multi-Link Device (MLD) station (STA). The frame is a unicast frame, a broadcast frame, or a multicast frame. In some embodiments of the present disclosure, the relay communication device 100C can be an AP MLD or a non-AP MLD. That is, the relay communication device 100C can be an AP MLD with an AP function, or a non-AP MLD without an AP function. In addition, the relay communication device 100C can also be an MLD that has both AP MLD and non-AP MLD capabilities.

In some embodiments of the present disclosure, the relay communication device 100C comprises a relay function unit 101C. The relay function unit 101C is configured to perform local reception or selective forwarding of a Media Access Control (MAC) Protocol Data Unit (MPDU) between an upstream node and a downstream node based on a destination address (DA) of a received frame. The relay communication device 100C further comprises an Aggregated MAC Protocol Data Unit (A-MPDU) de-aggregation unit 102C. The A-MPDU de-aggregation unit 102C is configured to communicate with the relay function unit 101C. If the A-MPDU de-aggregation unit 102C receives the frame sent by the upstream node, the A-MPDU de-aggregation unit 102C performs A-MPDU de-aggregation on the received frame.

With this technical solution, the relay communication device 100C includes the relay function unit 101C and the A-MPDU de-aggregation unit 102C which communicates with the relay function unit 101C. The A-MPDU de-aggregation unit 102C performs A-MPDU de-aggregation on the frame received from the upstream node, thereby enabling the relay communication device 100C to implement a high-reliability and low-latency Relay architecture and protocol.

In some embodiments of the present disclosure, the relay communication device 100C further comprises an MPDU header and Cyclic Redundancy Check (CRC) verification unit 103C, configured to communicate with the A-MPDU de-aggregation unit 102C. If the MPDU header and CRC verification unit 103C receives the frame sent by the upstream node via the A-MPDU de-aggregation unit 102C, the MPDU header and CRC verification unit 103C performs MPDU header and CRC verification on the received frame.

In some embodiments of the present disclosure, the relay communication device 100C further comprises an address filtering unit 104C, configured to communicate with the MPDU header and CRC verification unit 103C. If the address filtering unit 104C receives the frame sent by the upstream node via the MPDU header and CRC verification unit 103C, the address filtering unit 104C performs address filtering on the received frame.

In some embodiments of the present disclosure, the relay communication device 100C further comprises a block acknowledgment scoreboard 105C, configured to communicate with the address filtering unit 104C. If the block acknowledgment scoreboard 105C receives the frame sent by the upstream node via the address filtering unit 104C, the block acknowledgment scoreboard 105C performs acknowledgment scoring on the received frame.

In some embodiments of the present disclosure, the relay communication device 100C further comprises a duplicate detection unit 106C, configured to communicate with the block acknowledgment scoreboard 105C. If the duplicate detection unit 106C receives the frame sent by the upstream node via the block acknowledgment scoreboard 105C, the duplicate detection unit 106C performs duplicate detection on the received frame.

In some embodiments of the present disclosure, the relay communication device 100C further comprises a replay detection unit 107C, configured to communicate with the duplicate detection unit 106C. If the replay detection unit 107C receives the frame sent by the upstream node via the duplicate detection unit 106C, the replay detection unit 107C performs replay detection on the received frame. The replay detection unit 107C is configured to receive a data or robust management frame from another station (STA) to detect whether the received data or robust management frame is an unauthorized retransmission. In some embodiments of the present disclosure, the STA can be an AP MLD or a non-AP MLD.

In some embodiments of the present disclosure, the relay communication device 100C further comprises an MPDU header and CRC creation unit 108C, configured to communicate with the relay function unit 101C. If the MPDU header and CRC creation unit 108C receives a frame sent by a downstream node via the relay function unit 101C, the MPDU header and CRC creation unit 108C performs MPDU header and CRC creation on the received frame.

In some embodiments of the present disclosure, the relay communication device 100C further comprises an A-MPDU aggregation unit 109C, configured to communicate with the MPDU header and CRC creation unit 108C. If the A-MPDU aggregation unit 109C receives the frame sent by the downstream node via the MPDU header and CRC creation unit 108C, the A-MPDU aggregation unit 109C performs A-MPDU aggregation on the received frame.

In some embodiments of the present disclosure, the relay communication device 100C further comprises an MPDU encryption unit 110C and a Traffic Identifier (TID)-to-link mapping unit 111C. The relay function unit 101C is disposed between the MPDU encryption unit 110C and the TID-to-link mapping unit 111C to perform transmission.

In some embodiments of the present disclosure, the relay communication device 100C further comprises a link merging unit 112C. The relay function unit 101C is disposed between the link merging unit 112C and the block acknowledgment scoreboard 105C to perform reception.

In some embodiments of the present disclosure, the relay communication device further comprises an MLD upper MAC sublayer 113C, and at least one of the relay function unit 101C, the MPDU encryption unit 110C, the TID-to-link mapping unit 111C, the link merging unit 112C, and the block acknowledgment scoreboard 105C is disposed in the MLD upper MAC sublayer 113C.

Specifically, in some embodiments of the present disclosure, as shown in FIG. 1C, in the data plane architecture of the relay communication device 100C acting as an MLD, a relay function unit 101C is added compared to the data plane architecture of a traditional MLD. During transmission, the relay function unit 101C is located between the MPDU Encryption Unit 110C and the TID-to-Link Mapping Unit 111C. During reception, the relay function unit 101C is located between the Link Merging Unit 112C and the Block Ack Scoreboard 105C of the MLD upper MAC sublayer 113C.

The function of the Relay Function Unit 101C is to perform local reception or selective forwarding of an (A-)MPDU between an upstream node and a downstream node based on the destination address (DA) of a received frame. If the DA of the received frame is the relay communication device 100C (i.e., the relay itself), local reception is performed, and the frame undergoes upper MAC layer operations such as MPDU Decryption and is not forwarded further. If the DA of the received frame is another node, fragments of the received frame are reselected at the relay function unit 101C and forwarded for next-step processing, such as performing MPDU Header + CRC Creation and A-MPDU Aggregation. The reselection rule is to forward only successfully received frame fragments based on the result from the Block Ack Scoreboard 105C.

In addition, a Replay Detection (in Relay) unit 107C and a Duplicate Detection (in Relay) unit 106C, and their associated steps, are additionally defined. Their functions are as follows:

Replay Detection (in Relay) unit 107C: The replay detection mechanism defines a method by which a relay receiving a data or robust management frame from another STA can detect whether the received frame is an unauthorized retransmission. This replay protection mechanism is provided for data frames of STAs that use the Robust Security Network Association (RSNA) mechanism. A robust management frame replay protection mechanism is also provided for STAs that use the Counter Mode with Cipher-block Chaining Message Authentication Code Protocol (CCMP), the Galois/Counter Mode Protocol (GCMP), and the Broadcast/Multicast Integrity Protocol (BIP). In some embodiments of the present disclosure, an STA can be an AP MLD or a non-AP MLD.

Duplicate Detection (in Relay) unit 106C: Since the protocol includes MAC-level acknowledgments and retransmissions, a relay may receive a frame multiple times. The duplicate detection (in relay) process attempts to filter out these duplicates.

With such a design, the relay function unit 101C, located in the MLD upper MAC sublayer 113C, can flexibly select one or more links to receive relay frames and then use another one or more links to forward the relayed frames. The links selected by the relay function unit for receiving and sending frames can be completely the same, completely different, or partially the same. The present disclosure does not impose any limitation in this regard.

Specifically, in some embodiments of the present disclosure, as shown in FIG. 1C, when the relay communication device 100C receives a frame sent by an upstream node, an example flow in the data plane architecture is as follows:
1) Perform A-MPDU De-aggregation.
2) Perform MPDU Header + CRC Validation.
3) Perform Address 1 address filtering.
4) Perform Block Ack Scoreboarding.
5) Perform Link Merging (optional step).
6) Perform Duplicate Detection (optional step).
7) Perform Replay Detection (optional step).

Then, at the relay function unit 101C, the relay communication device 100C repackages the received data and forwards it to a downstream node according to an indication in a relevant frame. An example flow in the data plane architecture is as follows:
1) Perform Traffic Identifier (TID)-to-link mapping (optional step).
2) Perform Media Access Control Protocol Data Unit (MPDU) header and Cyclic Redundancy Check (CRC) creation.
3) Perform Aggregate MPDU (A-MPDU) aggregation.

The technical effect that can be achieved by this architecture design is as follows: after the relay communication device 100C receives data sent by an upstream node, the relay communication device 100C only needs to de-aggregate the A-MPDU, then verify the MPDU, and then forward the MPDU through the Relay Function via a few simple steps (as described above). After the MPDU is re-aggregated, it is sent to a downstream node. This process does not need to go through all upper Media Access Control (MAC) layer processes (for example, an MPDU Decryption/Encryption Unit, a Block Acknowledgement (BA) Buffering and Reordering Unit, etc.), which greatly saves the processing time of relayed packets and enables low-latency relay operations.

It should be noted that FIG. 1C also shows the data plane architecture when the relay communication device 100C acts as a traditional Multi-Link Device (MLD) (i.e., does not perform the relay function). In this case, the relay function unit 101C and its steps do not exist in FIG. 1C. The remaining steps are not necessarily all performed, and only some of them may be performed according to different requirements.

Specifically, in some embodiments of the present disclosure, after the relay communication device 100C receives a unicast frame, the behavior of the relay function unit 101C is as follows: the relay function unit 101C checks the (A-)MPDU received by the relay device via the wireless medium (WM). If the destination address (DA) matches the relay address, the (A-)MPDU is passed to a local higher-layer entity. Otherwise, the (A-)MPDU is forwarded to the next node via the WM using a four-address frame format or an A-MPDU format.

Specifically, in some embodiments of the present disclosure, after the relay communication device 100C receives a broadcast frame or a multicast frame, the behavior of the relay function unit 101C is as follows: an (A-)MPDU received by the relay device via the WM, which has a group address as its destination address (this includes an MPDU), is passed by the relay function unit 101C and then forwarded to the next node via the WM using a four-address frame format or an A-MPDU format.

Specifically, in some embodiments of the present disclosure, if all affiliated non-Access Point (non-AP) stations (STAs) to which the TID of the MPDU carried in the frame is mapped are in a doze state, the AP MLD buffers the individually addressed frame. Specifically, in some embodiments of the present disclosure, TID-to-link mapping control can be used to transmit MPDUs on the link.

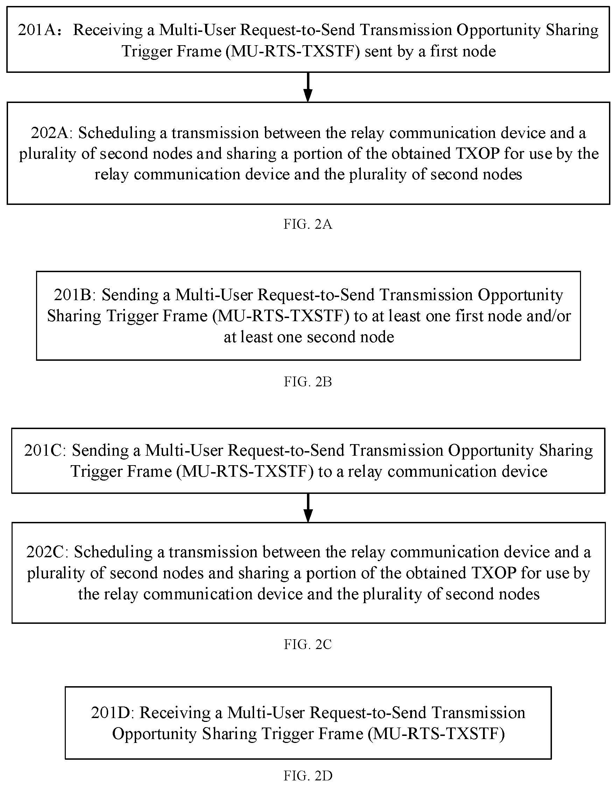

FIG. 2A is a schematic flowchart of a relay communication method according to an embodiment of the present disclosure. As shown in FIG. 2A, the relay communication method is performed by a relay communication device and includes at least one of the following operations: Operation 201A: receiving a Multi-User Request-to-Send Transmission Opportunity Sharing Trigger Frame (MU-RTS-TXSTF) sent by a first node, wherein the MU-RTS-TXSTF indicates a transmission opportunity (TXOP) obtained by the first node. Operation 202A: scheduling a transmission between the relay communication device and a plurality of second nodes and sharing a portion of the obtained TXOP for use by the relay communication device and the plurality of second nodes. In the scheme shown in FIG. 2A, the MU-RTS-TXSTF is sent by the first node to the relay communication device and is used for subsequent scheduling of data transmission among the relay communication device, the second node(s), and the first node.

According to the foregoing technical scheme, a transmission between the relay communication device and a plurality of second nodes is scheduled, and a portion of the obtained TXOP is shared for use by the relay communication device and the plurality of second nodes. In this way, relay (Relay) link scheduling and transmission can be designed for different scenarios.

FIG. 2B is a schematic flowchart of a relay communication method according to an embodiment of the present disclosure. As shown in FIG. 2B, the relay communication method provided by this embodiment of the present disclosure is performed by a relay communication device, wherein the relay communication method includes: Operation 201B: sending a Multi-User Request-to-Send Transmission Opportunity Sharing Trigger Frame (MU-RTS-TXSTF) to at least one first node and/or at least one second node. The MU-RTS-TXSTF indicates that after the relay communication device obtains a transmission opportunity (TXOP), a transmission between the at least one first node and the at least one second node is scheduled, and a portion of the obtained TXOP is shared for use by the first node and the at least one second node. At least one of the first node, the relay communication device, and the at least one second node is plural in number. In the scheme shown in FIG. 2B, the MU-RTS-TXSTF is sent by the relay communication device to the first and/or second node(s) and is used for subsequent scheduling of data transmission among the relay communication device, the second node(s), and the first node.

According to the foregoing technical scheme, a transmission between the first node and the at least one second node is scheduled, and a portion of the obtained TXOP is shared for use by the first node and the at least one second node, wherein at least one of the first node, the relay communication device, and the at least one second node is plural in number. In this way, relay link scheduling and transmission can be designed for different scenarios.

FIG. 2C is a schematic flowchart of a relay communication method according to an embodiment of the present disclosure. As shown in FIG. 2C, the relay communication method provided by this embodiment of the present disclosure is performed by a first node, wherein the relay communication method includes: Operation 201C: sending a Multi-User Request-to-Send Transmission Opportunity Sharing Trigger Frame (MU-RTS-TXSTF) to a relay communication device, wherein the MU-RTS-TXSTF indicates a transmission opportunity (TXOP) obtained by the first node. Operation 202C: scheduling a transmission between the relay communication device and a plurality of second nodes and sharing a portion of the obtained TXOP for use by the relay communication device and the plurality of second nodes. In one embodiment, the first node is, for example, an AP, and the second node is, for example, a STA. In another embodiment, the first node is, for example, a STA, and the second node is, for example, an AP. In the scheme shown in FIG. 2C, the MU-RTS-TXSTF is sent by the first node to the relay communication device and is used for subsequent scheduling of data transmission among the relay communication device, the second node(s), and the first node.

According to the foregoing technical scheme, a transmission between the relay communication device and a plurality of second nodes is scheduled, and a portion of the obtained TXOP is shared for use by the relay communication device and the plurality of second nodes. In this way, relay link scheduling and transmission can be designed for different scenarios.

FIG. 2D is a schematic flowchart of a relay communication method according to an embodiment of the present disclosure. As shown in FIG. 2D, the relay communication method provided by this embodiment of the present disclosure is performed by a first node, wherein the relay communication method includes: Operation 201D: receiving a Multi-User Request-to-Send Transmission Opportunity Sharing Trigger Frame (MU-RTS-TXSTF) sent by a relay communication device. The MU-RTS-TXSTF indicates that after the relay communication device obtains a transmission opportunity (TXOP), a transmission between the first node and at least one second node is scheduled, and a portion of the obtained TXOP is shared for use by the first node and the at least one second node. At least one of the first node, the relay communication device, and the at least one second node is plural in number. In one embodiment, the first node is, for example, an AP, and the second node is, for example, a STA. In another embodiment, the first node is, for example, a STA, and the second node is, for example, an AP. In the scheme shown in FIG. 2D, the MU-RTS-TXSTF is sent by the relay communication device to the first node and is used for subsequent scheduling of data transmission among the relay communication device, the second node(s), and the first node.

According to the foregoing technical scheme, a transmission between the first node and the at least one second node is scheduled, and a portion of the obtained TXOP is shared for use by the first node and the at least one second node, wherein at least one of the first node, the relay communication device, and the at least one second node is plural in number. In this way, relay link scheduling and transmission can be designed for different scenarios.

In some embodiments of the present disclosure, the relay communication method further includes: performing, by the relay communication device, data transmission with the first node before obtaining the portion of the TXOP. For example, before the first node sends the MU-RTS-TXSTF to the relay communication device, the first node may first send the data to be relayed to the relay communication device; and after the first node sends the MU-RTS-TXSTF to the relay communication device, the first node may stop data transmission within the time window of the TXOP.

In some embodiments of the present disclosure, the relay communication method further includes: performing, by the relay communication device, data transmission with the first node after obtaining the portion of the TXOP. For example, after the relay communication device receives the MU-RTS-TXSTF, the relay communication device may relay data received from the second node(s) to the first node within the time window of the shared TXOP.

In some embodiments of the present disclosure, the relay communication method further includes: determining an allocation strategy of the TXOP for the relay communication device and the plurality of second nodes. In some embodiments of the present disclosure, the allocation strategy of the TXOP is determined by the first node according to buffer statuses of the relay communication device and the plurality of second nodes. In some embodiments of the present disclosure, the allocation strategy of the TXOP is determined by the relay communication device according to buffer statuses of the first node and the plurality of second nodes. In some embodiments of the present disclosure, a buffer may carry information about the type of data service cached by the device and the corresponding amount of data. When determining the allocated duration for TXOP sharing, TXOP can be preferentially allocated to devices with services having low-latency characteristics. In addition, a longer duration can be allocated to services with a large amount of cached data, and a shorter duration can be allocated to services with a small amount of cached data, thereby better achieving prioritized transmission for low-latency services to reduce latency.

In some embodiments of the present disclosure, the operation of sharing the portion of the obtained TXOP for use by the relay communication device and the plurality of second nodes includes: sending, by the relay communication device, an indicative signaling to the plurality of second nodes to share the portion of the TXOP for use by at least one of the plurality of second nodes, so as to receive data sent by the at least one of the plurality of second nodes within the shared portion of time.

In some embodiments of the present disclosure, when a channel is idle for a duration of an extended inter-frame space (xIFS), the relay communication device receives data sent by the plurality of second nodes to relay the data to the first node. The length of the xIFS is greater than a length of a Short Inter-Frame Space (SIFS), and the length of the xIFS is less than or equal to a length of a Point Coordination Function Inter-Frame Space (PIFS). In this way, regardless of whether the second node(s) can directly establish communication with and receive instructions from the first node, the second node(s) can obtain the TXOP from the relay communication device and perform data transmission to the relay communication device or the first node.

In some embodiments of the present disclosure, the scheduling operation includes: receiving data to be transmitted and a receiver address (RA) or a destination address (DA) of the data to be transmitted, and performing transmission of the data to be transmitted according to the RA or the DA.

In some embodiments of the present disclosure, there are a plurality of relay communication devices involved. The RAs of the data to be transmitted indicate the plurality of relay communication devices respectively, and the DAs of the data to be transmitted indicate the plurality of second nodes respectively. In this manner, the same data to be transmitted can be relayed to different second nodes respectively through the plurality of relay communication devices, thereby improving transmission efficiency.

In some embodiments of the present disclosure, there are a plurality of relay communication devices involved. The RAs of the data to be transmitted indicate the plurality of relay communication devices respectively, and the DA(s) of the data to be transmitted indicates a same second node. In this manner, the data to be transmitted can be relayed to the same second node through the plurality of relay devices, thereby improving transmission reliability by providing redundant data.

In some embodiments of the present disclosure, there are a plurality of relay communication devices involved, and the data to be transmitted includes a plurality pieces of data to be transmitted. The RAs of the plurality pieces of data to be transmitted indicate the plurality of relay communication devices respectively, and the DAs of the plurality pieces of data to be transmitted indicate the plurality of second nodes respectively. In this manner, the plurality pieces of data to be transmitted can be relayed to different second nodes respectively through the plurality of relay communication devices, thereby improving transmission efficiency.

In some embodiments of the present disclosure, there are a plurality of relay communication devices involved, and the data to be transmitted includes a plurality pieces of data to be transmitted. The RAs of the plurality pieces of data to be transmitted indicate the plurality of relay communication devices respectively, and the DAs of the plurality pieces of data to be transmitted indicate a same second node. In this manner, the plurality of pieces of data to be transmitted can be relayed to the same second node through the plurality of relay communication devices, thereby improving transmission reliability by providing redundant transmission paths.

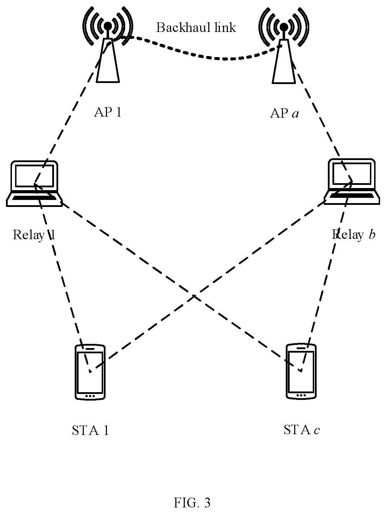

FIG. 3 is a schematic diagram of a network topology for relay transmission according to an embodiment of the present disclosure, as shown in FIG. 3. The network topology for relay transmission provided by this embodiment of the present disclosure may include one or more APs (e.g., AP1), one or more Relay nodes (e.g., Relay1 to Relay1b), and one or more STAs (e.g., STA1 to STAc). Specifically, the relay transmission scenarios can be divided as follows:
1) one AP <-> one Relay node <-> one STA;
2) one AP <-> one Relay node <-> multiple STAs;
3) one AP <-> multiple Relay nodes <-> one STA;
4) one AP <-> multiple Relay nodes <-> multiple STAs;
5) multiple APs <-> one Relay node <-> one STA;
6) multiple APs <-> one Relay node <-> multiple STAs;
7) multiple APs <-> multiple Relay nodes <-> one STA;
8) multiple APs <-> multiple Relay nodes <-> multiple STAs.

The Relay node is, for example, the relay communication device 100A as shown in FIG. 1A, the relay communication device 100B as shown in FIG. 1B, or the relay communication device 100C as shown in FIG. 1C.

It is noted that the relay transmission scenarios are described using an example in which an Access Point (AP) obtains a Transmission Opportunity (TXOP) and then shares it for use by a Relay node and/or a Station (STA), where the AP corresponds to the aforementioned first node, and the STA (which in some scenarios may also include an AP and/or a Relay) corresponds to the aforementioned second node. However, the present disclosure is not limited thereto. For example, a non-AP STA may obtain a TXOP and share it for use by an AP and/or a Relay node (i.e., the STA acts as the aforementioned first node), or a Relay node may obtain a TXOP and share it for use by an AP and/or a STA. These variations are not described in detail herein.

In addition, in the present disclosure, an AP/Relay node/STA obtains a TXOP and then shares part or all of the time resources of the obtained TXOP for use by other devices for relay transmission. Alternatively, an AP/Relay node/STA may obtain a TXOP and then share part or all of the frequency/channel/Resource Unit (RU) resources of the obtained TXOP for use by other devices for relay transmission. For example, after AP1 obtains a TXOP, it sends data to Relay1 via channel 1, and then AP1 schedules Relay1 to use channel 2 to send the relayed Data to STA1. For brevity, these alternatives are not described in detail herein.

In a relay transmission scenario, an AP (e.g., AP1 to APa) and a STA (e.g., STA1 to STAc) may be far apart, and their wireless signals may not cover each other, which creates a hidden terminal problem. In that case, the AP and the STA may simultaneously send (Data) frames to the Relay node (after obtaining a TXOP), which causes signal conflicts, resulting in the Relay node failing to receive the signals from the AP and the STA. To solve this potential conflict problem, two solutions are possible: 1) When the AP detects via Clear Channel Assessment (CCA) that the channel is idle, it can send a Request-to-Send (RTS) frame (or another suitable frame) to the Relay node. After receiving the RTS, the Relay node immediately responds with a Clear-to-Send (CTS) frame (or a corresponding other frame) after a Short Inter-Frame Space (SIFS) interval. Since the signal of the Relay node can cover the STA, after the STA receives the CTS frame sent by the Relay node, it can determine that another device (e.g., the AP) is communicating with the Relay node, and the STA then suspends sending (Data) frames to the Relay node. 2) Alternatively, when the STA detects via CCA that the channel is idle, it can send an RTS frame (or another suitable frame) to the Relay node. After receiving the RTS, the Relay node immediately responds with a CTS frame (or a corresponding other frame) after a SIFS interval. Since the signal of the Relay node can cover the AP, after the AP receives the CTS frame sent by the Relay node, it can determine that another device (e.g., the STA) is communicating with the Relay node, and the AP then suspends sending (Data) frames to the Relay node. This solves the potential conflict caused by the hidden terminal problem. It is noted that this method is applicable to various stages of relay transmission, for example, before the option of the AP transmitting data to the Relay node, or in operations after the AP shares the TXOP with other nodes.

### Scenario 1: Scheduling and transmission involving one AP, one Relay node, and one STA

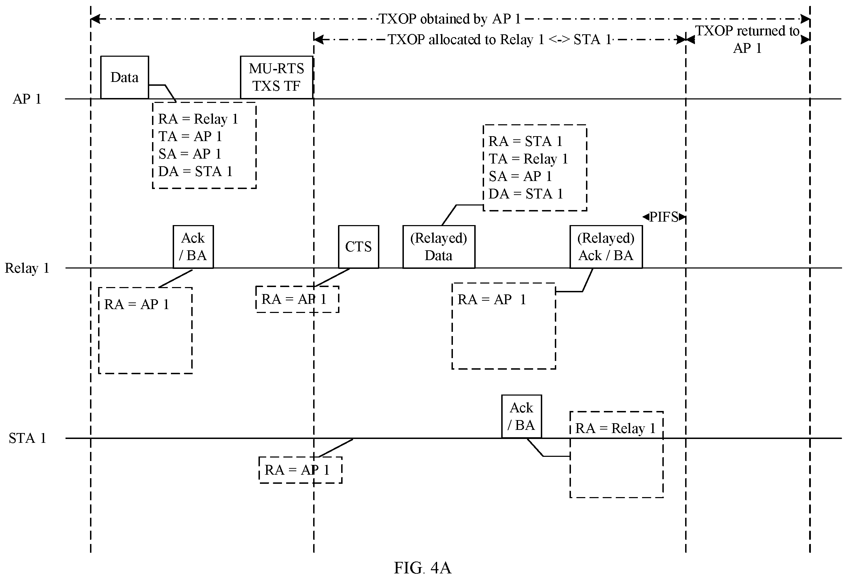

FIG. 4A is a schematic diagram of a scenario for scheduling and transmission of relay communication provided by an embodiment of the present disclosure. As shown in FIG. 4A, this is a scenario in which a Basic Service Set (BSS) has only one AP (i.e., AP1) and one Relay node (i.e., Relay1), and the Relay node provides a relay service for only one STA (i.e., STA1).

This example describes a case in which, after obtaining a TXOP, AP1 first sends Data to Relay1 and then shares part of the time of the obtained TXOP with Relay1 and STA1 for relay transmission (e.g., Relay1 transmitting data to AP1). However, the present disclosure is not limited to this process. It is also possible that after AP1 obtains the TXOP, it first shares part of the time of the TXOP with Relay1 and STA1 for relay transmission (e.g., STA1 transmitting data to Relay1), and then transmission between Relay1 and AP1 (e.g., Relay1 transmitting data to AP1) is performed.

The operations shown in FIG. 4A are as follows (the present disclosure is not limited to the following process; some steps may be omitted, or the order of some steps may be changed):
1) After obtaining the TXOP, AP1 sends a Data frame. The Receiver Address (RA) of the Data frame is set to the MAC address of Relay1, the Transmitter Address (TA) is set to the MAC address of AP1, the Source Address (SA) is set to the MAC address of AP1, and the Destination Address (DA) is set to the MAC address of STA1. This indicates that the Data frame originates from AP1, is sent by AP1 for reception by Relay1, and is ultimately destined for STA1.
2) After receiving the Data frame sent by AP1, Relay1 replies to AP1 with an acknowledgement (Ack) frame or a block acknowledgement (Block Ack) frame after a SIFS interval, indicating that Relay1 has received the Data frame that AP1 requested to be forwarded. If it is an Ack frame, the RA is set to the MAC address of AP1, and there is no TA. If it is a Block Ack frame, the RA is set to the MAC address of AP1, and the TA is set to the MAC address of Relay1. It is noted that this step is optional. For example, if Relay1 has not yet successfully forwarded the Data frame, it may not need to send an acknowledgement to AP1.
3) AP1 sends a Multi-User Request-to-Send Transmission Opportunity Sharing Trigger Frame (MU-RTS TXS TF) to Relay1 and/or STA1 to share part of the time of its obtained TXOP for their use. The specific time is indicated in this MU-RTS TXS TF. The TA of the MU-RTS TXS TF is set to the MAC address of AP1, and the RA can be set to a multicast or broadcast address. The specific target recipients, Relay1 and/or STA1, are indicated by a User Info field within a User Info List in the MU-RTS TXS TF. Specifically, an Allocation Duration field in the User Info field indicates the length of time shared with other devices (e.g., Relay1 and/or STA1).
4) A SIFS interval after AP1 sends the MU-RTS TXS TF, Relay1 and/or STA1 simultaneously reply with a CTS frame to AP1, indicating acceptance and use of the shared TXOP. The RA of the CTS frames sent by Relay1 and/or STA1 is set to the MAC address of AP1. It should be noted that STA1 may not be within the signal coverage range of AP1. In this case, STA1 cannot receive the MU-RTS TXS TF sent by AP1 and thus does not reply with a CTS frame; only Relay1 replies with a CTS frame.
5) A SIFS interval after Relay1 sends the CTS frame, Relay1 sends a relayed Data frame. The RA of this relayed Data frame is set to the MAC address of STA1, the TA is set to the MAC address of Relay1, the SA is set to the MAC address of AP1, and the DA is set to the MAC address of STA1. This indicates that the Data frame originates from AP1, is sent by Relay1 for reception by STA1, and is ultimately destined for STA1.
6) When receiving the relayed Data frame sent by Relay1, STA1 replies to Relay1 with an Ack or Block Ack frame after a SIFS interval, indicating that STA1 has received the Data frame forwarded by Relay1. If it is an Ack frame, the RA is set to the MAC address of Relay1, and there is no TA. If it is a Block Ack frame, the RA is set to the MAC address of Relay1, and the TA is set to the MAC address of STA1.
7) When receiving the Ack or Block Ack frame sent by STA1, Relay1 sends a relayed Ack or Block Ack frame to AP1 after a SIFS interval, indicating that STA1 has successfully received the Data frame that AP1 requested Relay1 to forward. If it is a relayed Ack frame, the RA is set to the MAC address of AP1, and there is no TA. If it is a relayed Block Ack frame, the RA is set to the MAC address of AP1, and the TA is set to the MAC address of Relay1.
8) After the relay transmission is completed within the TXOP shared by AP1, if time of the TXOP still remains, Relay1 or STA1 can proactively send a use termination frame (e.g., a CF-End frame or another frame) to AP1 to return the remaining TXOP time to AP1 for use. Alternatively, AP1 may detect via CCA that the channel is idle for a duration greater than or equal to a Point Coordination Function Inter-Frame Space (PIFS), and then proactively reclaim the use of the TXOP to continue with other operations.

The effect of this embodiment is that in a scenario with one AP, one Relay node, and one STA, after the AP obtains a TXOP, it can directly schedule the transmission between the Relay node and the STA. This avoids the need for the Relay node and the STA to separately compete for channel access rights before performing their transmission, thereby reducing the latency of relay transmission to some extent.

### Scenario 2: Scheduling and transmission involving one AP, one Relay node, and multiple STAs

In some embodiments of the present disclosure, the first node, the relay communication device, and the at least one second node include one first node (1 AP), one relay communication device (1 Relay node), and a plurality of second nodes (multiple STAs). The one relay communication device provides a relay service for the plurality of second nodes.

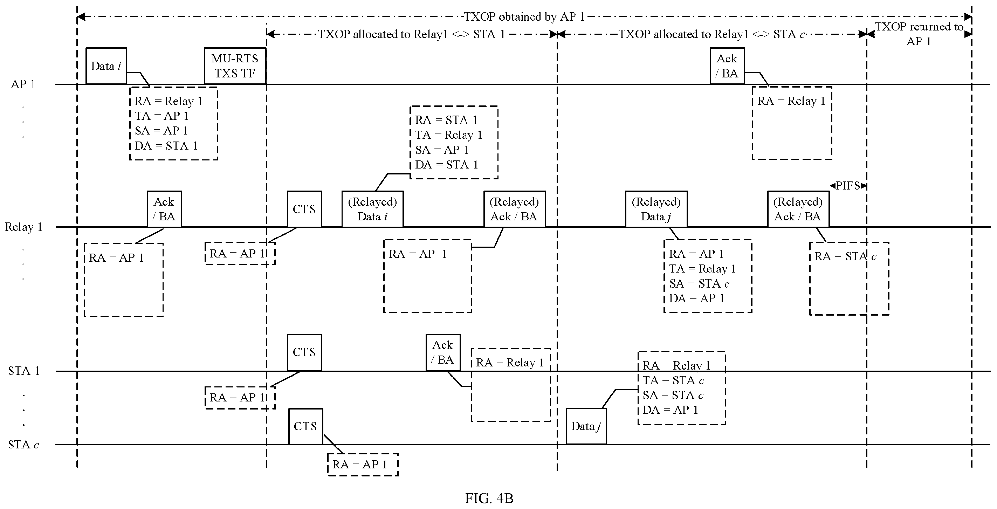

FIG. 4B is a schematic diagram of a scenario for scheduling and transmission of relay communication provided by an embodiment of the present disclosure. As shown in FIG. 4B, this is a scenario in which a BSS has only one AP (i.e., AP1), one Relay node (i.e., Relay1), and multiple STAs (i.e., STA1 to STAc), and the Relay node provides a relay service for the multiple STAs (i.e., STA1 to STAc).

Specifically, in some embodiments of the present disclosure, this example describes a case in which, after AP1 obtains a TXOP, AP1 first sends Data to Relay1, and then AP1 shares part of the time of its obtained TXOP with Relay1 and STA1 to STAc for relay transmission (e.g., Relay1 transmitting data to STA1 to STAc). However, the present disclosure is not limited to this process. It is also possible that after AP1 obtains the TXOP, it first shares part of the time of the TXOP with Relay1 and STA1 to STAc for relay transmission (e.g., STA1 to STAc transmitting data to Relay1), and then transmission between Relay1 and AP1 (e.g., Relay1 transmitting data to AP1) is performed.

The steps shown in FIG. 4B are as follows (the present disclosure is not limited to the following process; some steps may be omitted, or the order of some steps may be changed):
1) After obtaining the TXOP, AP1 sends a Data frame (Data *i*). The RA of Data *i* is set to the MAC address of Relay1, the TA is set to the MAC address of AP1, the SA is set to the MAC address of AP1, and the DA is set to the MAC address of STA1 (and/or STAc). This indicates that the Data frame originates from AP1, is sent by AP1 for reception by Relay1, and is ultimately destined for STA1 (and/or STAc).
2) When receiving the Data frame sent by AP1, Relay1 replies to AP1 with an Ack or Block Ack frame after a SIFS interval, indicating that Relay1 has received the Data frame that AP1 requested to be forwarded. If it is an Ack frame, the RA is set to the MAC address of AP1, and there is no TA. If it is a Block Ack frame, the RA is set to the MAC address of AP1, and the TA is set to the MAC address of Relay1. It is noted that this step is optional. For example, if Relay1 has not yet successfully forwarded the Data frame, it may not need to send an acknowledgement to AP1.
3) AP1 sends a Multi-User Request-to-Send Transmission Opportunity Sharing Trigger Frame (MU-RTS TXS TF) to Relay1 and/or STA 1 to STAc. Through this frame, AP1 shares a portion of the time of its obtained TXOP for use by Relay1 and/or STA 1 to STAc. The TA of the MU-RTS TXS TF is set to the MAC address of AP1, and the RA can be set to a multicast address or a broadcast address. The specific target recipients, Relay1 and/or STA 1 to STAc, are indicated by a User Info field within a User Info List in the MU-RTS TXS TF. The specific time can be indicated in the following way: an Allocation Duration field in the User Info field of the MU-RTS TXS TF indicates the length of time shared with other devices (for example, Relay1 and/or STA 1 to STAc).
4) A SIFS after AP1 sends the MU-RTS TXS TF, both the Relay1 and/or STA 1 to STAc reply with a CTS frame to AP1 to indicate acceptance and use of the TXOP shared by AP1. The RA of the CTS frames sent by Relay1 and/or STA 1 to STAc is set to the MAC address of AP1. It should be noted that STA 1 to STAc may not be within the signal coverage range of AP1. In this case, STA 1 to STAc cannot receive the MU-RTS TXS TF sent by AP1 and thus will not reply with a CTS frame; only Relay1 replies with a CTS frame.
5) After a SIFS interval from sending the CTS frame, Relay1 sends the relayed Data *i*. The RA of this relayed Data *i* is set to the MAC address of STA1 (or STAc), the TA is set to the MAC address of Relay1, the SA is set to the MAC address of AP1, and the DA is set to the MAC address of STA1 (or STAc). This indicates that the data frame originates from AP1, is sent by Relay1 to STA1 (or STAc), and the destination node is STA1 (or STAc).
6) When receiving the relayed Data *i* sent by Relay1, STA1 (or STAc) replies to Relay1 with an Acknowledgement (Ack)/BlockAck frame after a SIFS interval, indicating that STA1 (or STAc) has received the Data *i* forwarded by Relay1. If it is an Ack frame, the RA is set to the MAC address of Relay1, and there is no TA. If it is a BlockAck frame, the RA is set to the MAC address of Relay1, and the TA is set to the MAC address of STA1 (or STAc).
7) When Relay1 receives the Ack/BlockAck frame sent by STA1 (or STAc), it sends a relayed Ack/BlockAck frame to AP1 after a SIFS interval, indicating that STA1 (or STAc) has successfully received the Data *i* that AP1 requested Relay1 to forward. If it is a relayed Ack frame, the RA is set to the MAC address of AP1, and there is no TA. If it is a relayed BlockAck frame, the RA is set to the MAC address of AP1, and the TA is set to the MAC address of Relay1.
8) Additionally, STAc can also send a data frame (Data *j*) within the TXOP shared by AP1. The RA of Data *j* is set to the MAC address of Relay1, the TA is set to the MAC address of STAc, the SA is set to the MAC address of STAc, and the DA is set to the MAC address of AP1. This indicates that the data frame originates from STAc, is sent by STAc to Relay1, and the destination node is AP1.
9) When Relay1 receives Data *j* requested by STAc to be relayed, it sends the relayed Data *j* after a SIFS interval. The RA of this relayed Data *j* is set to the MAC address of AP1, the TA is set to the MAC address of Relay1, the SA is set to the MAC address of STAc, and the DA is set to the MAC address of AP1. This indicates that the relayed Data *j* originates from STAc, is sent by Relay1 to AP1, and the destination node is AP1.
10) When AP1 receives the relayed Data *j* sent by Relay1, it replies to Relay1 with an Ack/BlockAck frame after a SIFS interval, indicating that AP1 has received the Data *j* forwarded by Relay1. If it is an Ack frame, the RA is set to the MAC address of Relay1, and there is no TA. If it is a BlockAck frame, the RA is set to the MAC address of Relay1, and the TA is set to the MAC address of AP1.
11) When Relay1 receives the Ack/BlockAck frame sent by AP1, it relays this Ack/BlockAck frame to STAc after a SIFS interval, informing STAc that the destination node AP1 has successfully received the Data *j* forwarded by Relay1. If it is an Ack frame, the RA is set to the MAC address of STAc, and there is no TA. If it is a BlockAck frame, the RA is set to the MAC address of STAc, and the TA is set to the MAC address of Relay1.
12) After the relay transmission is completed within the TXOP shared by AP1, if time still remains, Relay1 or STA 1 to STAc can proactively send a use termination frame (for example, a CF-End frame or another frame) to AP1 to return the remaining TXOP time to AP1 for use. Alternatively, if AP1 detects via CCA that the channel has been idle for a duration greater than or equal to a PIFS duration, it proactively reclaims the right to use the TXOP and continues with other operations.

The effects of this embodiment are as follows: In a scenario with only one AP, one Relay, and multiple STAs, this embodiment, on one hand, supports one Relay node providing a relay service for multiple STAs, and on the other hand, after the AP obtains a TXOP, it can directly schedule the transmission between the Relay node and the multiple STAs. This eliminates the need for the Relay node and the multiple STAs to separately compete for channel access rights before performing transmission between the Relay node and an STA after one of them has successfully obtained a TXOP. To a certain extent, this reduces the latency of relay transmission.

Since STAc may not be within the signal coverage range of AP1, when AP1 sends the MU-RTS TXS TF to share the TXOP (with Relay1 and STA1 and/or STAc), STAc may not know when it should send Data *j*, which needs to be relayed to AP1 via Relay1, to Relay1. To solve this problem, there are the following two methods:

### 1. Explicit method:

After Relay1 finishes using the TXOP shared by AP1, it proactively sends an MU-RTS TXS TF to STAc, sharing the remaining time with STAc one more time. After responding with a CTS frame, STAc immediately sends Data *j* to Relay1, and then Relay1 can perform subsequent operations, such as relaying Data *j* to AP1. Alternatively, Relay1 sends any other frame to STAc that includes an indication for STAc to use the current TXOP for transmission. When receiving this indicative signaling, STAc can send a response frame and then immediately send Data *j* to Relay1, or STAc can immediately send Data *j* to Relay1 without sending a response frame. Subsequently, Relay1 can perform follow-up operations, such as relaying Data *j* to AP1.

### 2. Implicit method:

After Relay1 finishes using the TXOP shared by AP1, it can pause using the channel. At this point, when STAc detects via CCA that the channel has been idle for a duration of an x Inter-Frame Space (xIFS), it can proactively send Data *j* to Relay1. Subsequently, Relay1 can perform follow-up operations, such as relaying Data *j* to AP1. It should be noted that the length of xIFS is greater than that of SIFS, but less than or equal to the length of PIFS.

### Scenario 3: Scheduling and transmission involving one AP, multiple Relay nodes, and one STA

In some embodiments of the present disclosure, the first node, the relay communication device, and the at least one second node include one first node (1 AP), a plurality of relay communication devices (multiple Relay nodes), and one second node (1 STA), The plurality of relay communication devices provide a relay service for the one second node.

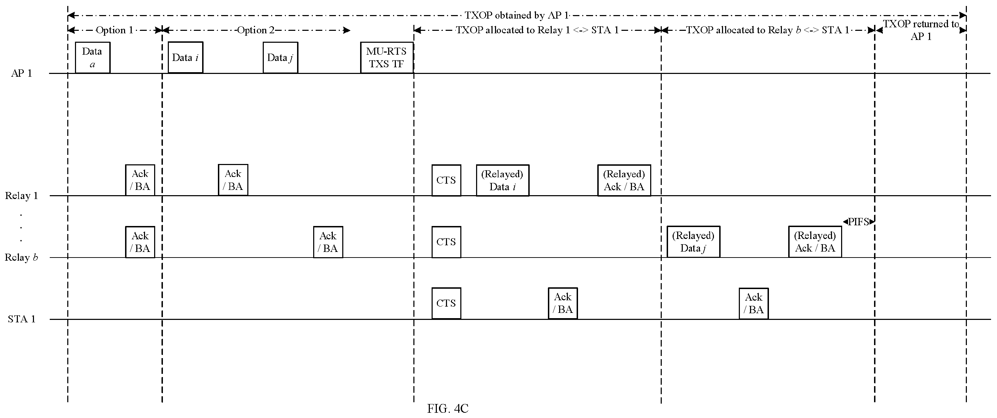

FIG. 4C is a schematic diagram of a scenario for scheduling and transmission of relay communication provided by an embodiment of the present disclosure. As shown in FIG. 4C, this is a scenario in which a Basic Service Set (BSS) has only one AP (that is, AP1), multiple Relay nodes (that is, Relay1 to Relay b), and the multiple Relay nodes can all provide a relay service for the same STA (that is, STA1).

This example is described using a case where, after AP1 obtains a TXOP, AP1 first sends data to Relay1 to Relay b, and then AP1 shares a portion of the time of its obtained TXOP with Relay1 to Relay b and STA1 for relay transmission (for example, Relay1 to Relay b respectively transmit data to STA1). However, the present disclosure is not limited to this process. It is also possible that after AP1 obtains the TXOP, it first shares a portion of the time of the TXOP with Relay1 to Relay b and STA1 for relay transmission (for example, STA1 transmitting data to Relay1 to Relay b), and then transmission between Relay1 to Relay b and AP1 is performed (for example, Relay1 to Relay b transmitting data to AP1).

The operations of FIG. 4C are as follows (the present disclosure is not limited to the following process, and may also execute only some of the steps, or change the order of some steps).

Option 1 (includes only the following two steps, 1) and 2)): The AP sends data to multiple Relay nodes, and all the multiple Relay nodes respond with an acknowledgement.
1) After AP1 obtains the TXOP, it sends a data frame (Data *a*). The RA of Data *a* is set to a multicast address, corresponding to the MAC addresses of Relay1 to Relay b, the TA is set to the MAC address of AP1, the SA is set to the MAC address of AP1, and the DA is set to the MAC address of STA1. This indicates that Data *a* originates from AP1, is sent by AP1 to Relay1 to Relay b, and the destination node is STA1.
2) When Relay1 to Relay b receive Data *a* sent by AP1, they all reply to AP1 with an Ack/BlockAck frame after a SIFS interval, indicating that Relay1 to Relay b have received the Data *a* that AP1 requested to be forwarded. If it is an Ack frame, the RA is set to the MAC address of AP1, and there is no TA. If it is a BlockAck frame, the RA is set to the MAC address of AP1, and the TAs are respectively set to the MAC addresses of Relay1 to Relay b. It should be noted that this step may also be omitted; that is, at this time, if Relay1 has not yet successfully completed the forwarding of the data frame, an acknowledgement does not need to be sent to AP1.

Option 2 (includes only the following two steps, 1) and 2)): The AP sends data to multiple Relay nodes separately in a time-division manner, and the multiple Relay nodes provide acknowledgements separately.
1) After AP1 obtains the TXOP, it sends a data frame (Data *i*). The RA of Data *i* is set to the MAC address of Relay1, the TA is set to the MAC address of AP1, the SA is set to the MAC address of AP1, and the DA is set to the MAC address of STA1. This indicates that Data *i* originates from AP1, is sent by AP1 to Relay1, and the destination node is STA1. After Relay1 receives Data *i* sent by AP1, it replies to AP1 with an Ack/BlockAck frame after a SIFS interval, indicating that Relay1 has received the Data *i* that AP1 requested to be forwarded. If it is an Ack frame, the RA is set to the MAC address of AP1, and the TA is set to the MAC address of Relay1.
2) Then, AP1 sends Data *j*, where the RA of Data *j* is set to the MAC address of Relay b, the TA is set to the MAC address of AP1, the SA is set to the MAC address of AP1, and the DA is set to the MAC address of STA1. This indicates that Data *j* originates from AP1, is sent by AP1 to Relay b, and the destination node is STA1. When receiving Data *j* sent by AP1, Relay b, after a SIFS interval, replies to AP1 with an Ack/BlockAck frame, indicating that Relay b has received Data *j* that AP1 requested to be forwarded. If an Ack frame is sent, the RA is set to the MAC address of AP1, and the TA is absent. If a BlockAck frame is sent, the RA is set to the MAC address of AP1, and the TA is set to the MAC address of Relay b.
3) AP1 sends a MU-RTS TXS TF to Relay1 to Relay b and/or STA1. AP1 shares a portion of the time of a TXOP it has obtained for use by Relay1 to Relay b and/or STA1, wherein the specific time is indicated in the MU-RTS TXS TF. The TA of the MU-RTS TXS TF is set to the MAC address of AP1, and the RA can be set to a multicast or broadcast address. A User Info field within a User Info List in the MU-RTS TXS TF indicates the specific target recipients as Relay1 to Relay b and/or STA1. Specifically, an Allocation Duration field in the User Info field of the MU-RTS TXS TF indicates the duration of time shared with other devices (e.g., Relay1 to Relay b and/or STA1).
4) A SIFS interval after AP1 sends the MU-RTS TXS TF, Relay1 to Relay b and/or STA1 simultaneously reply with a CTS frame to AP1 to indicate acceptance and use of the TXOP shared by AP1. The RA of the CTS frames sent by Relay1 to Relay b and/or STA1 is set to the MAC address of AP1. It should be understood, STA1 may not be within the signal coverage range of AP1. In this case, STA1 may not receive the MU-RTS TXS TF sent by AP1 and thus does not reply with a CTS frame. Only the relays among Relay1 to Relay b that received the MU-RTS TXS TF reply with a CTS frame.
5) Then, a SIFS interval after sending the CTS frame, Relay1 sends the relayed Data *i*, where the RA of this relayed Data i is set to the MAC address of STA1, the TA is set to the MAC address of Relay1, the SA is set to the MAC address of AP1, and the DA is set to the MAC address of STA1. This indicates that Data *i* originates from AP1, is sent by Relay1 to STA1, and the destination node is STA1.
6) When receiving the relayed Data *i* sent by Relay1, STA1 replies to Relay1 with an Ack/BlockAck frame after a SIFS interval, indicating that STA1 has received the Data *i* forwarded by Relay1. If an Ack frame is sent, the RA is set to the MAC address of Relay1, and the TA is absent. If a BlockAck frame is sent, the RA is set to the MAC address of Relay1, and the TA is set to the MAC address of STA1.
7) When receiving the Ack/BlockAck frame sent by STA1, Relay1 sends a relayed Ack/BlockAck frame to AP1 after a SIFS interval, indicating that STA1 has successfully received the Data *i* that AP1 requested Relay1 to forward. If a relayed Ack frame is sent, the RA is set to the MAC address of AP1, and the TA is absent. If a relayed BlockAck frame is sent, the RA is set to the MAC address of AP1, and the TA is set to the MAC address of Relay1.
8) Additionally, Relay b may send the relayed Data *j*. The RA of this relayed Data *j* is set to the MAC address of STA1, the TA is set to the MAC address of Relay b, the SA is set to the MAC address of AP1, and the DA is set to the MAC address of STA1. This indicates that Data *j* originates from AP1, is sent by Relay b to STA1, and the destination node is STA1.
9) When receiving the relayed Data *j* sent by Relay b, STA1replies to Relay b with an Ack/BlockAck frame after a SIFS interval, indicating that STA1 has received the Data *j* forwarded by Relay b. If an Ack frame is sent, the RA is set to the MAC address of Relay b, and the TA is absent. If a BlockAck frame is sent, the RA is set to the MAC address of Relay b, and the TA is set to the MAC address of STA1.
10) When receiving the Ack/BlockAck frame sent by STA1, Relay b sends a relayed Ack/BlockAck frame to AP1 after a SIFS interval, indicating that STA1 has successfully received the Data *j* that AP1 requested Relay b to forward. If a relayed Ack frame is sent, the RA is set to the MAC address of AP1, and the TA is absent. If a relayed BlockAck frame is sent, the RA is set to the MAC address of AP1, and the TA is set to the MAC address of Relay b.
11) After the relay transmission is completed within the TXOP shared by AP1, if time remains, Relay1 to Relay b or STA1 can proactively send a use termination frame (e.g., a CF-End frame or another frame) to AP1 to return the remaining TXOP time to AP1 for use. Alternatively, if AP1 detects via CCA that the channel has been idle for a duration greater than or equal to a PIFS duration, AP1 proactively reclaims the right to use the TXOP and continues with other operations.

Note: In this example, Data *i* and Data *j* can be respectively considered as parts of Data *a*.

This embodiment can achieve the following effects: In a scenario with one AP, multiple Relay nodes, and one STA, this embodiment supports multiple Relay nodes providing a relay service for one STA. Furthermore, after the AP obtains a TXOP, it can directly schedule the transmission between the multiple Relay nodes and the STA. This eliminates the need for the multiple Relay nodes and the STA to compete separately for channel access rights before the successful Relay node or STA can perform the transmission. This reduces the latency of relay transmission to a certain extent.

### Scenario 4: Scheduling and transmission for one AP, multiple Relay nodes, and multiple STAs

In some embodiments of the present disclosure, the first node, the relay communication device, and the at least one second node include one first node (1 AP), a plurality of relay communication devices (multiple Relay nodes), and a plurality of second nodes (multiple STAs). At least one of the plurality of relay communication devices provides a relay service for at least one of the plurality of second nodes.

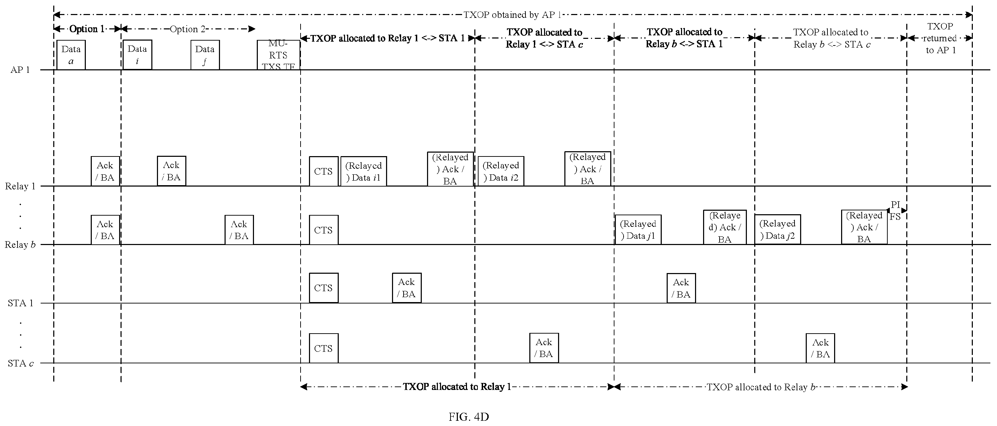

FIG. 4D is a schematic diagram of a scenario for scheduling and transmission in relay communication, according to an embodiment of the present disclosure. As shown in FIG. 4D, a BSS includes only one AP (i.e., AP1), multiple Relay nodes (i.e., Relay1 to Relay b), and multiple STAs (i.e., STA1 to STAc), where the multiple Relay nodes can provide a relay service for the multiple STAs.

This example is described for a case where, after AP1 obtains a TXOP, AP1 first sends Data to Relay1~Relay b, and then AP1 shares a portion of the time of its obtained TXOP with Relay1~Relay b and STA1~STAc for relay transmission (e.g., Relay1 first transmits data to STA1~STAc, and then Relayb transmits data to STA1~STAc). However, the present disclosure is not limited to this process. Alternatively, after AP1 obtains the TXOP, it may first share a portion of the TXOP time with Relay1~Relayb and STA1~STAc for relay transmission (e.g., STA1~STAc first transmit data to Relay1, and then STA1~STAc transmit data to Relay b), and then transmission between Relay1~Relay b and AP1 is performed (e.g., Relay1~Relay b transmit data to AP1).

The operations for FIG. 4D are as follows (the present disclosure is not limited to the following process; only some of the steps may be executed, or the order of some steps may be changed):
Option 1 (includes only the following two steps, 1) and 2)): The AP sends data to multiple Relay nodes, and the multiple Relay nodes all respond with an acknowledgement (this content is identical to Option 1 of FIG. 4C).
1) After AP1 obtains the TXOP, it sends a data frame (Data *a*). The RA of Data *a* is set to a multicast address corresponding to the MAC addresses of Relay 1~Relay b, the TA is set to the MAC address of AP1, the SA is set to the MAC address of AP1, and the DA is set to the MAC address of STA1. This indicates that Data *a* originates from AP1, is sent by AP1 to Relay 1~Relay b, and the destination node is STA1.
2) When receiving Data *a* sent by AP1, Relay 1~Relay b all reply to AP1 with an Ack/BlockAck frame after a SIFS interval, indicating that Relay 1~Relay b have received Data *a* that AP1 requested to be forwarded. If an Ack frame is sent, the RA is set to the MAC address of AP1, and the TA is absent. If a BlockAck frame is sent, the RA is set to the MAC address of AP1, and the TAs are respectively set to the MAC addresses of Relay 1~Relay b. Notably, this step may be omitted; that is, if Relay1 has not yet successfully completed the forwarding of the data frame, an acknowledgement may not need to be sent to AP1.

Option 2 (includes only the following two steps, 1) and 2)): The AP sends data to multiple Relays separately in a time-division manner, and the multiple Relays provide acknowledgements separately (this content is identical to Option 2 of FIG. 4C).
1) After AP1 obtains the TXOP, it sends a data frame (Data *i*). The RA of Data *i* is set to the MAC address of Relay1, the TA is set to the MAC address of AP1, the SA is set to the MAC address of AP1, and the DA is set to the MAC address of STA1. This indicates that Data *i* originates from AP1, is sent by AP1 to Relay1, and the destination node is STA1. When receiving Data i sent by AP1, Relay1 replies to AP1 with an Ack/BlockAck frame after a SIFS interval, indicating that Relay1 has received Data *i* that AP1 requested to be forwarded. If an Ack frame is sent, the RA is set to the MAC address of AP1, and the TA is absent. If a BlockAck frame is sent, the RA is set to the MAC address of AP1, and the TA is set to the MAC address of Relay1.
2) Then, AP1 sends Data *j.* The RA) of Data *j* is set to the MAC address of Relay b, the TA is set to the MAC address of AP1, the SA is set to the MAC address of AP1, and the DA is set to the MAC address of STA1. This indicates that Data *j* originates from AP1 and is sent by AP1 to Relay b, and the destination node is STA1. When receiving Data *j* sent by AP1, Relay b replies to AP1 with an Ack/BlockAck frame after a SIFS interval, indicating that Relay b has received Data *j* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay *b*.
3) AP1 sends a MU-RTS-TXS TF to Relay 1~Relay b and/or STA1~STAc. AP1 shares a portion of the time of a TXOP it has obtained (the specific time is indicated in this MU-RTS-TXS TF) for use by Relay 1~Relay b and/or STA1~STAc. In the MU-RTS-TXS TF, the TA is set to the MAC address of AP1, and the RA can be set to a multicast address or a broadcast address. A User Info field within a User Info List in the MU-RTS-TXS TF indicates the specific target recipients as Relay 1~Relay b and/or STA1~STAc. Regarding the specific time, an Allocation Duration field in the User Info field of the MU-RTS-TXS TF indicates the length of time shared with other devices (e.g., Relay 1~Relay b and/or STA1~STAc).
4) A SIFS interval after AP1 sends the MU-RTS-TXS TF, Relay1~Relay b and/or STA1~STAc all reply with a CTS frame to AP1 to indicate acceptance and use of the TXOP shared by AP1. The RA of the CTS frames sent by Relay 1~Relay b and/or STA1~STAc is set to the MAC address of AP1. It should be noted that some or all of STA1~STAc may not be within the signal coverage range of AP1. In this case, some or all of STA1~STAc may not receive the MU-RTS-TXS TF sent by AP1, and thus will not reply with a CTS frame. Only the nodes among Relay1~Relay b and/or STA1~STAc that received the MU-RTS-TXS TF reply with a CTS frame.
5) Then, data transmission between Relay1 and STA1~STAc is performed. A SIFS interval after sending the CTS frame, Relay1 sends the relayed Data *i1*. The RA of this relayed Data *i1* is set to the MAC address of STA1, the TA is set to the MAC address of Relay1, the SA is set to the MAC address of AP1, and the DA is set to the MAC address of STA1. This indicates that Data *i1* originates from AP1 and is sent by Relay1 to STA1, and the destination node is STA1.
6) When receiving the relayed Data *i1* sent by Relay1, STA1 replies to Relay1 with an Ack/BlockAck frame after a SIFS interval, indicating that STA1 has received the Data *i1* forwarded by Relay1. If it is an Ack frame, the RA is set to the MAC address of Relay1, and there is no TA. If it is a BlockAck frame, the RA is set to the MAC address of Relay1, and the TA is set to the MAC address of STA1.
7) When receiving the Ack/BlockAck frame sent by STA1, Relay1 sends a relayed Ack/BlockAck frame to AP1 after a SIFS interval, indicating that STA1 has successfully received the Data *i1* that AP1 requested Relay1 to forward. If it is a relayed Ack frame, the RA is set to the MAC address of AP1, and there is no TA. If it is a relayed BlockAck frame, the RA is set to the MAC address of AP1, and the TA is set to the MAC address of Relay1.
8) Relay1 sends the relayed Data *i2.* The RA of this relayed Data *i2* is set to the MAC address of STAc, the TA is set to the MAC address of Relay1, the SA is set to the MAC address of AP1, and the DA is set to the MAC address of STAc. This indicates that Data *i2* originates from AP1 and is sent by Relay1 to STAc, and the destination node is STAc.
9) When receiving the relayed Data *i2* sent by Relay1, STAc replies to Relay1 with an Ack/BlockAck frame after a SIFS interval, indicating that STAc has received the Data *i2* forwarded by Relay1. If it is an Ack frame, the RA is set to the MAC address of Relay1, and there is no TA. If it is a BlockAck frame, the RA is set to the MAC address of Relay1, and the TA is set to the MAC address of STA *c*.
10) When receiving the Ack/BlockAck frame sent by STAc, Relay1 sends a relayed Ack/BlockAck frame to AP1 after a SIFS interval, indicating that STAc has successfully received the Data *i2* that AP1 requested Relay1 to forward. If it is a relayed Ack frame, the RA is set to the MAC address of AP1, and there is no TA. If it is a relayed BlockAck frame, the RA is set to the MAC address of AP1, and the TA is set to the MAC address of Relay c.
11) Data transmission is performed between Relay b and STA1~STAc. Relay b sends the relayed Data *j1*. The RA of this relayed Data *j1* is set to the MAC address of STA1, the TA is set to the MAC address of Relay b, the SA is set to the MAC address of AP1, and the DA is set to the MAC address of STA1. This indicates that Data *j1* originates from AP1 and is sent by Relay b to be received by STA1, and the destination node is STA1.
12) When receiving the relayed Data *j1* sent by Relay b, STA1 replies to Relay b with an Ack/BlockAck frame after a SIFS interval, indicating that STA1 has received the Data *j1* forwarded by Relay b. If it is an Ack frame, the RA is set to the MAC address of Relay b, and there is no TA. If it is a BlockAck frame, the RA is set to the MAC address of Relay b, and the TA is set to the MAC address of STA1.
13) When receiving the Ack/BlockAck frame sent by STA1, Relay b sends a relayed Ack/BlockAck frame to AP1 after a SIFS interval. This indicates that STA1 has successfully received the Data *j1* that AP1 requested Relay b to forward. If it is a relayed Ack frame, the RA is set to the MAC address of AP1, and there is no TA. If it is a relayed BlockAck frame, the RA is set to the MAC address of AP1, and the TA is set to the MAC address of Relay b.
14) Relay b sends the relayed Data *j2*. The RA of this relayed Data *j2* is set to the MAC address of STAc, the TA is set to the MAC address of Relay b, the SA is set to the MAC address of AP1, and the DA is set to the MAC address of STAc. This indicates that Data *j2* originates from AP1 and is sent by Relay b to STAc, and the destination node is STAc.
15) When receiving the relayed Data *j2* sent by Relay b, STAc replies to Relay b with an Ack/BlockAck frame after a SIFS interval, indicating that STAc has received the Data *j2* forwarded by Relay b. If it is an Ack frame, the RA is set to the MAC address of Relay b, and there is no TA. If it is a BlockAck frame, the RA is set to the MAC address of Relay b, and the TA is set to the MAC address of STAc.
16) When receiving the Ack/BlockAck frame sent by STAc, Relay b sends a relayed Ack/BlockAck frame to AP1 after a SIFS interval, indicating that STAc has successfully received the Data *j2* that AP1 requested Relay b to forward. If it is a relayed Ack frame, the RA is set to the MAC address of AP1, and there is no TA. If it is a relayed BlockAck frame, the RA is set to the MAC address of AP1, and the TA is set to the MAC address of Relay b.
17) After the relay transmission is completed within the TXOP shared by AP1, if time still remains, Relay 1~Relay b or STA1~STAc can proactively send a use termination frame (e.g., a Contention-Free End (CF-End) frame or another frame) to AP1 to return the remaining TXOP time to AP1 for use. Alternatively, if AP1 detects via CCA that the channel has been idle for a duration greater than or equal to a PIFS duration, AP1 proactively reclaims the right to use the TXOP and continues with other operations.

Note: In this example, Data *i* and Data *j* can be respectively considered as parts of Data *a*. Furthermore, Data *i2* and Data *i2* can be respectively considered as parts of Data *i*, and Data *j1* and Data *j2* can be respectively considered as parts of Data *j*.

The effects achievable by this embodiment are as follows: In a scenario with one AP, multiple Relay nodes, and multiple STAs, on one hand, this embodiment supports one or more Relay nodes providing a relay service for one or more STAs (including: one Relay providing a relay service for one STA; one Relay node providing a relay service for multiple STAs; multiple Relay nodes providing a relay service for one STA; and multiple Relay nodes providing a relay service for multiple STAs), On the other hand, after the AP obtains a TXOP, it can directly schedule transmissions between the multiple Relay nodes and multiple STAs. This eliminates the need for the multiple Relay nodes and multiple STAs to separately compete for channel access rights, and for a Relay node or STA to then perform transmission between the Relay node and the STA only after successfully obtaining a TXOP. This reduces the latency of relay transmission to a certain extent.

### Scenario 5: Scheduling and transmission for multiple Aps, one Relay node, and one STA

In some embodiments of the present disclosure, the first node includes a plurality of first nodes (a plurality of access points (APs)), the relay communication device includes one relay communication device (one Relay node), and the at least one second node includes one second node (one station (STA)). The plurality of first nodes provide a relay service for the one second node through the one relay communication device. The MU-RTS-TXS TF further indicates that after one of the first nodes obtains a transmission opportunity (TXOP), a transmission between the relay communication device and one or more other first nodes is scheduled, and a portion of the obtained TXOP duration is shared with the one or more other first nodes for use.

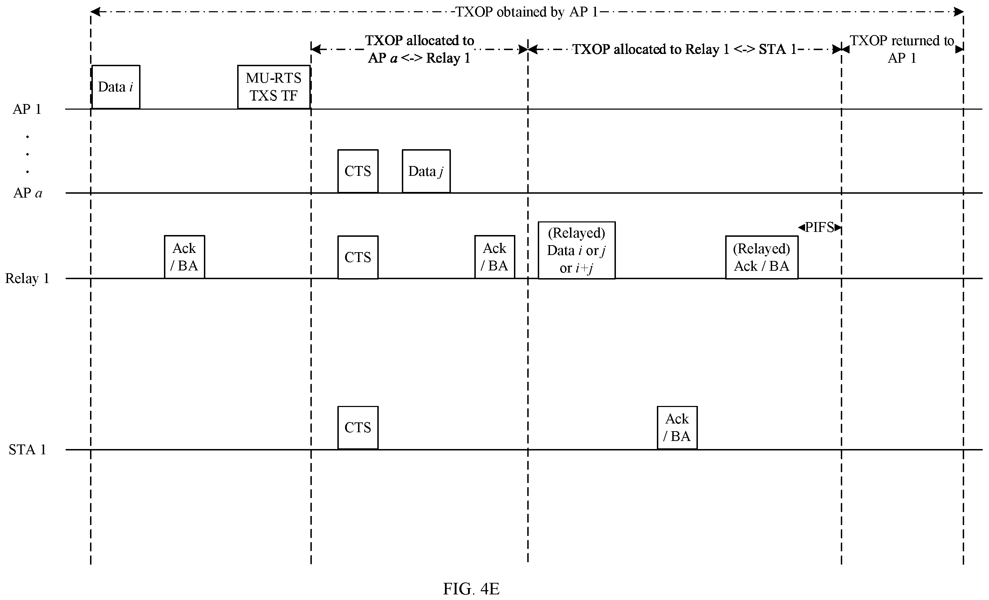

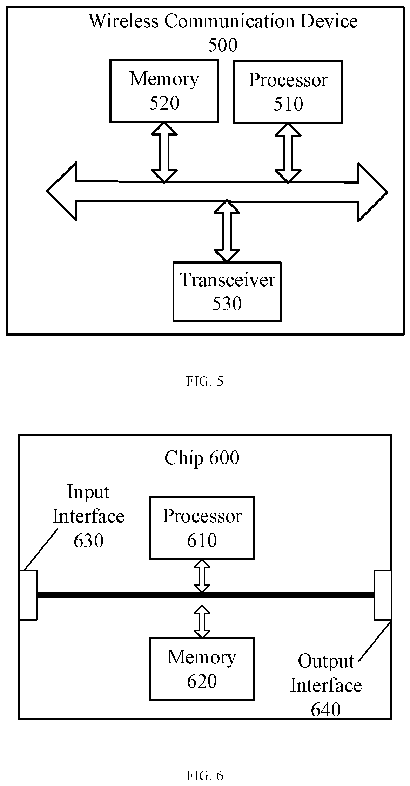

FIG. 4E is a schematic diagram of a scenario for scheduling and transmission in relay communication, according to an embodiment of the present disclosure. As shown in FIG. 5.3-6, a scenario is depicted where a network has a plurality of APs (i.e., AP1 to AP *a*), one Relay (i.e., Relay 1), and this Relay provides a relay service for only one STA (i.e., STA1).

This example describes a case where after AP1 obtains a TXOP, AP1 first sends data to Relay1, and then AP1 shares a portion of its obtained TXOP duration with other APs (e.g., AP a in the figure), Relay1, and STA1 for relay transmission (e.g., AP a transmits data to Relay1, and Relay1 transmits data to AP1). However, the present disclosure is not limited to this process. It is also possible that after AP1 obtains the TXOP, it first shares a portion of the TXOP duration with Relay1 and STA1 for relay transmission (e.g., STA1 transmits data to Relay1), and then transmission between Relay1 and AP1 and/or APa is performed (e.g., Relay1 transmits data to AP1 and/or AP a).

The operations of FIG. 4E are as follows (the present disclosure is not limited to the following process, and it is also possible to execute only some of the steps or to change the order of some steps):
1) After AP1 obtains the TXOP, it sends a data frame (e.g., Data *i*). The RA of Data *i* is set to the MAC address of Relay1, the TA is set to the MAC address of AP1, the SA is set to the MAC address of AP1, and the DA is set to the MAC address of STA1. This indicates that the data frame originates from AP1, is sent by AP1 to Relay1, and the destination node is STA1.
2) Relay1 receives Data *i* sent by AP1 and, after a SIFS interval, replies to AP1 with an Ack/BlockAck frame, indicating that Relay1 has received Data *i* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay1. It is worth noting that this step may be omitted; that is, if Relay1 has not yet successfully completed the forwarding of Data *i*, it may not send a confirmation to AP1.
3) AP1 sends an MU-RTS-TXS TF to AP *a* and Relay1 (and STA1). AP1 shares a portion of the TXOP duration it has obtained (the specific duration is indicated in this MU-RTS-TXS TF) with AP *a* and Relay1 (and STA1) for their use. In the MU-RTS-TXS TF, the TA is set to the MAC address of AP1, and the RA can be set to a multicast address or a broadcast address. A User Info field within a User Info List in the MU-RTS-TXS TF indicates the specific target recipients as AP *a* and Relay1 (and STA1). Specifically, an Allocation Duration field in the User Info field of the MU-RTS-TXS TF indicates the length of the duration shared with other devices (e.g., AP *a* and/or Relay1 and/or STA1).
4) A SIFS interval after AP1 sends the MU-RTS-TXS TF, AP *a* and Relay1 (and STA1) both reply with a CTS frame to AP1 to indicate acceptance and use of the TXOP shared by AP1. The RA of the CTS frames sent by AP *a* and Relay1 (and STA1) is set to the MAC address of AP1. It is worth noting that STA1 may not be within the signal coverage range of AP1. In this case, STA1 may not receive the MU-RTS-TXS TF sent by AP1 and thus will not reply with a CTS frame; only AP *a* and Relay1 reply with CTS frames.
5) AP *a* sends Data *j* that needs to be relayed by Relay1. The RA of this relayed Data *j* is set to the MAC address of Relay1, the TA is set to the MAC address of AP *a*, the SA is set to the MAC address of AP *a*, and the DA is set to the MAC address of STA1. This indicates that Data *j* originates from AP *a*, is sent by AP *a* for Relay1 to receive, and the destination node is STA1.
6) Relay1 receives Data *j* sent by AP *a* and, after a SIFS interval, replies to AP *a* with an Ack/BlockAck frame, indicating that Relay1 has received Data *j* that AP *a* requested to be forwarded. If it is an Ack frame, the RA is set to the MAC address of AP *a*, and there is no TA. If it is a BlockAck frame, the RA is set to the MAC address of AP *a*, and the TA is set to the MAC address of Relay1. It is worth noting that this step may be omitted; that is, if Relay1 has not yet successfully completed the forwarding of Data *j*, it may not send a confirmation to AP *a*.
7) Relay1 sends a relayed data frame (which can be part or all of Data *i* requested by AP1, part or all of Data *j* requested by AP *a*, or part or all of Data *i*+Data *j* requested by AP1 and AP a; the present disclosure does not limit this). The RA of the relayed data frame is set to the MAC address of STA1, the TA is set to the MAC address of Relay1, the SA is set to the MAC address of AP1 and/or AP *a*, and the DA is set to the MAC address of STA1. This indicates that the data frame originates from AP1 and/or AP *a*, is sent by Relay1 for STA1 to receive, and the destination node is STA1.
8) STA1 receives the relayed data frame sent by Relay1 and, after a SIFS interval, replies to Relay1 with an Ack/BlockAck frame, indicating that STA1 has received the data frame forwarded by Relay1. If it is an Ack frame, the RA is set to the MAC address of Relay1, and there is no TA. If it is a BlockAck frame, the RA is set to the MAC address of Relay1, and the TA is set to the MAC address of STA1.
9) Relay1 receives the Ack/BlockAck frame sent by STA1 and, after a SIFS interval, sends a relayed Ack/BlockAck frame to AP1 and/or AP *a*, indicating that STA1 has successfully received the data frame that AP1 and/or AP *a* requested Relay1 to forward. If it is a relayed Ack frame, the RA is set to the MAC address of AP1 and/or AP *a,* and there is no TA.

If it is a relayed BlockAck frame, the RA is set to the MAC address of AP1 and/or AP *a,* and the TA is set to the MAC address of Relay1.

10) After the relay transmission is completed within the TXOP shared by AP1, if time still remains, AP *a* and/or Relay1 and/or STA1 can actively send a use termination frame (e.g., a CF-End frame or another frame) to AP1 to return the remaining TXOP time to AP1 for use. Alternatively, if AP1 detects via CCA that the channel has been idle for a duration greater than or equal to a PIFS duration, AP1 actively reclaims the right to use the TXOP and continues with other operations.

MAC address: If Relay1 simultaneously relays part or all of Data *i* and Data *j* requested for forwarding by AP1 and AP a, the SA can be handled in one of the following two ways:
i. The SA is set to the multicast address corresponding to AP1 and AP *a*; (the multicast address information must be negotiated with Relay1 and STA1 in advance).
ii. The MAC addresses of AP1 and AP *a* are carried separately in the data frame (including in the SA).

The effects achievable by this embodiment are as follows: In a scenario with a plurality of APs, one Relay node, and one STA, on the one hand, this embodiment supports a plurality of APs providing a relay service for one STA through the same Relay node, and on the other hand, after one of the APs obtains a TXOP, it can directly schedule the transmission between one or more other APs and the Relay node. This eliminates the need for other APs, the Relay node, and the STA to individually compete for channel access rights, which would otherwise be required before the device that successfully obtains the TXOP can perform transmission between the AP and the Relay node and/or between the Relay node and the STA. This reduces the latency of relay transmission to a certain extent.

### Scenario 6: Scheduling and transmission for multiple Aps, one Relay node, and multiple STAs

In some embodiments of the present disclosure, the first node includes a plurality of first nodes (a plurality of APs), the relay communication device includes one relay communication device (one Relay), and the at least one second node includes a plurality of second nodes (a plurality of STAs). The plurality of first nodes provide a relay service for at least one of the plurality of second nodes through the one relay communication device. The MU-RTS-TXS TF further indicates that after one of the first nodes obtains a TXOP, a transmission between the relay communication device and one or more other first nodes is scheduled, and a portion of the obtained TXOP duration is shared with the one or more other first nodes for use.

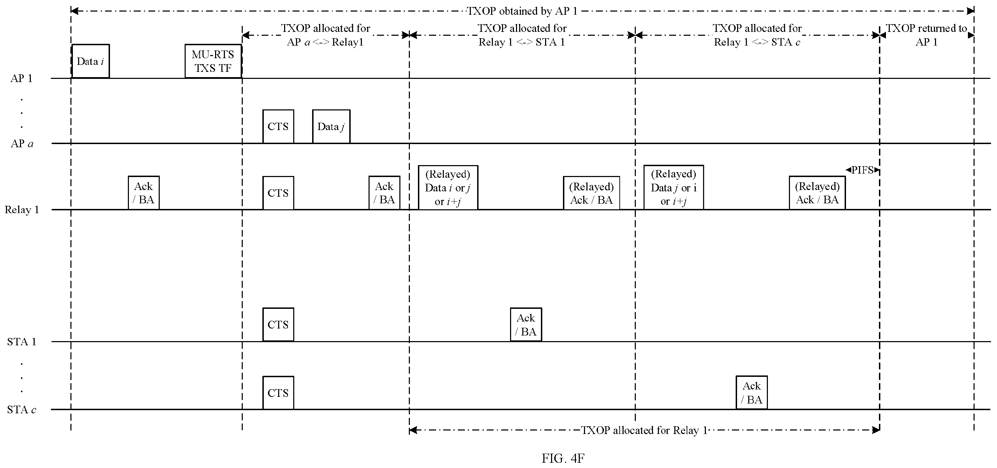

FIG. 4F is a schematic diagram of a scenario for scheduling and transmission in relay communication, according to an embodiment of the present disclosure. As shown in FIG. 4F, a scenario is depicted where a network has a plurality of APs (i.e., AP1 to AP *a*), one Relay node (i.e., Relay1), and a plurality of STAs (i.e., STA1 to STAc), and the Relay node provides a relay service for the plurality of STAs (i.e., STA1 to STAc).

This example describes a case where after AP1 obtains a TXOP, AP1 first sends data to Relay1, and then AP1 shares a portion of its obtained TXOP duration with other APs (e.g., AP *a* in the figure), Relay1, and STA1 to STAc for relay transmission (e.g., AP *a* transmits data to Relay1, and Relay1 transmits data to STA1 to STA *c*). However, the present disclosure is not limited to this process. It is also possible that after AP1 obtains the TXOP, it first shares a portion of the TXOP duration with Relay1 and STA1 to STA *c* for relay transmission (e.g., STA1 to STAc transmit data to Relay1), and then transmission between Relay1 and AP1 and/or AP *a* is performed (e.g., Relay1 transmits data to AP1 and/or AP *a*).

The operations of FIG. 4F are as follows (the present disclosure is not limited to the following process, and it is also possible to execute only some of the steps or to change the order of some steps):
1) After AP1 obtains the TXOP, it sends a data frame (e.g., Data *i*), where the RA of Data *i* is set to the MAC address of Relay1, the TA is set to the MAC address of AP1, the SA is set to the MAC address of AP1, and the DA is set to the MAC address of STA1. This indicates that the data frame originates from AP1, is sent by AP1 for Relay1 to receive, and the destination node is STA1.
2) Relay1 receives Data *i* sent by AP1 and, after a SIFS interval, replies to AP1 with an Ack/BlockAck frame, indicating that Relay1 has received Data *i* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay1. It is worth noting that this step may be omitted; that is, if Relay1 has not yet successfully completed the forwarding of Data *i*, it may not send a confirmation to AP1.
3) AP1 sends a MU-RTS-TXS TF to AP *a* and Relay1 (and STA1~STAc), sharing a portion of the TXOP it has obtained (the specific time is indicated in the MU-RTS-TXS TF) with AP *a* and Relay1 (and STA1~STAc) for use. In the MU-RTS-TXS TF, the TA is set to the MAC address of AP1, and the RA can be set to a multicast address or a broadcast address. A User Info field within the User Info List of the MU-RTS-TXS TF indicates that the specific target recipients are AP *a* and Relay1 (and STA1~STA c). Specific time: The Allocation Duration field in the User Info field of the MU-RTS-TXS TF indicates the duration of the time shared with other devices (e.g., AP *a* and/or Relay1 and/or STA1~STAc).
4) A SIFS after AP1 sends the MU-RTS-TXS TF, AP *a* and Relay1 (and STA1~STAc) all reply with a CTS frame to AP1 to indicate acceptance and use of the TXOP shared by AP1. The RA of the CTS frames sent by AP *a* and Relay1 (and STA1~STAc) is set to the MAC address of AP1. It should be noted that some or all of STA1~STAc may be outside the signal coverage of AP1. In this case, the STAs among STA1~STAc that cannot receive the MU-RTS-TXS TF sent by AP1 will not reply with a CTS frame. Only the STAs that receive the MU-RTS-TXS TF from AP1, along with AP *a* and Relay1, reply with CTS frames.
5) AP *a* sends Data *j* to be relayed by Relay1. For this relayed Data *j*, the RA is set to the MAC address of Relay1, the TA is set to the MAC address of AP *a*, the SA is set to the MAC address of AP *a*, and the DA is set to the MAC address of STA1. This indicates that Data *j* originates from AP *a*, is transmitted by Relay1, and is destined for STA1.
6) Relay1 receives Data *j* sent by AP *a* and, after a SIFS interval, replies to AP *a* with an Ack/BlockAck frame, indicating that Relay1 has received Data *j* requested by AP *a* for forwarding. If an Ack frame is sent, the RA is set to the MAC address of AP *a*, and there is no TA. If a BlockAck frame is sent, the RA is set to the MAC address of AP *a*, and the TA is set to the MAC address of Relay1. It should be noted that this step may be omitted; that is, if Relay1 has not yet successfully forwarded Data *j*, it is not required to send a confirmation to AP *a.*
7) Relay1 sends a relayed data frame (which can be part or all of Data *i* requested by AP1, part or all of Data *j* requested by AP *a*, or part or all of Data *i* + Data *j* requested by AP1 and AP *a;* this is not limited by the present disclosure). The RA of the relayed data frame is set to the MAC address of STA1, the TA is set to the MAC address of Relay1, the SA is set to the MAC address of AP1 and/or AP *a,* and the DA is set to the MAC address of STA1. This indicates that the data frame originates from AP1 and/or AP *a*, is transmitted by Relay1, and is destined for STA1.
8) STA1 receives the relayed data frame sent by Relay1 and, after a SIFS interval, replies to Relay1 with an Ack/BlockAck frame, indicating that STA1 has received the data frame forwarded by Relay1. If an Ack frame is sent, the RA is set to the MAC address of Relay1, and there is no TA. If a BlockAck frame is sent, the RA is set to the MAC address of Relay1, and the TA is set to the MAC address of STA1.
9) Relay1 receives the Ack/BlockAck frame sent by STA1 and, after a SIFS interval, sends a relayed Ack/BlockAck frame to AP1 and/or AP *a,* indicating that STA1 has successfully received the data frame that AP1 and/or AP a requested Relay1 to forward. If a relayed Ack frame is sent, the RA is set to the MAC address of AP1 and/or AP *a*, and there is no TA. If a relayed BlockAck frame is sent, the RA is set to the MAC address of AP1 and/or AP *a*, and the TA is set to the MAC address of Relay1.
10) Relay1 sends a relayed data frame (which can be part or all of Data *i* requested by AP1, part or all of Data *j* requested by AP *a*, or part or all of Data *i* + Data *j* requested by AP1 and AP *a*; this is not limited by the present disclosure). The RA of the relayed data frame is set to the MAC address of STA *c*, the TA is set to the MAC address of Relay1, the SA is set to the MAC address of AP1 and/or AP *a*, and the DA is set to the MAC address of STA *c*. This indicates that the data frame originates from AP1 and/or AP *a*, is transmitted by Relay1, and is destined for STA *c*.
11) STA *a* receives the relayed data frame sent by Relay1 and, after a SIFS interval, replies to Relay1 with an Ack/BlockAck frame, indicating that STA *c* has received the data frame forwarded by Relay1. If an Ack frame is sent, the RA is set to the MAC address of Relay1, and there is no TA. If a BlockAck frame is sent, the RA is set to the MAC address of Relay1, and the TA is set to the MAC address of STA *c*.
12) Relay1 receives the Ack/BlockAck frame sent by STA *c* and, after a SIFS interval, sends a relayed Ack/BlockAck frame to AP1 and/or AP *a,* indicating that STA *c* has successfully received the data frame that AP1 and/or AP *a* requested Relay1 to forward. If a relayed Ack frame is sent, the RA is set to the MAC address of AP1 and/or AP *a*, and there is no TA. If a relayed BlockAck frame is sent, the RA is set to the MAC address of AP1 and/or AP *a*, and the TA is set to the MAC address of Relay1.
13) After the relay transmission within the TXOP shared by AP1 is completed, if time remains, AP *a* and/or Relay1 and/or STA1~STA *c* can actively send a frame to terminate use (e.g., a CF-End frame or another frame) to AP1 to return the remaining TXOP time to AP1 for its use. Alternatively, if AP1 detects via CCA that the channel has been idle for a duration greater than or equal to a PIFS duration, AP1 actively reclaims the right to use the TXOP and proceeds with other operations.

MAC address: If Relay1 simultaneously relays part or all of Data *i* + Data *j* requested for forwarding by AP1 and AP *a*, the SA can be handled in one of the following two ways:
i. The SA is set to the multicast address corresponding to AP1 and AP *a;* (prior information about the multicast address must be negotiated with Relay1 and STA1 in advance).
ii. The MAC addresses of AP1 and AP *a* are carried separately in the data frame (including in the SA field).

The effects achievable by this embodiment are as follows: In a scenario with a plurality of APs, one Relay, and a plurality of STAs, this embodiment, on the one hand, enables a plurality of APs to provide a relay service for one or more STAs through the same Relay. On the other hand, after one AP obtains a TXOP, it can directly schedule the transmission between another one or more APs and the Relay. This eliminates the need for other APs, the Relay, and the plurality of STAs to individually compete for channel access rights. The transmission between the AP and the Relay and/or between the Relay and the STA can then be performed by the entity that successfully obtained the TXOP, which reduces the latency of relay transmission to a certain extent.

### Scenario 7: Scheduling and transmission for multiple APs, multiple Relay nodes, and one STA

In some embodiments of the present disclosure, the first node, the relay communication device, and the at least one second node include a plurality of first nodes (a plurality of APs), a plurality of relay communication devices (a plurality of Relay nodes), and one second node (1 STA), respectively. The plurality of first nodes provide a relay service for the one second node through the plurality of relay communication devices. The MU-RTS-TXS TF further indicates that after one of the first nodes obtains a TXOP, a transmission between the relay communication devices and another one or more of the first nodes is scheduled, and a portion of the obtained TXOP is shared with the another one or more first nodes for use.

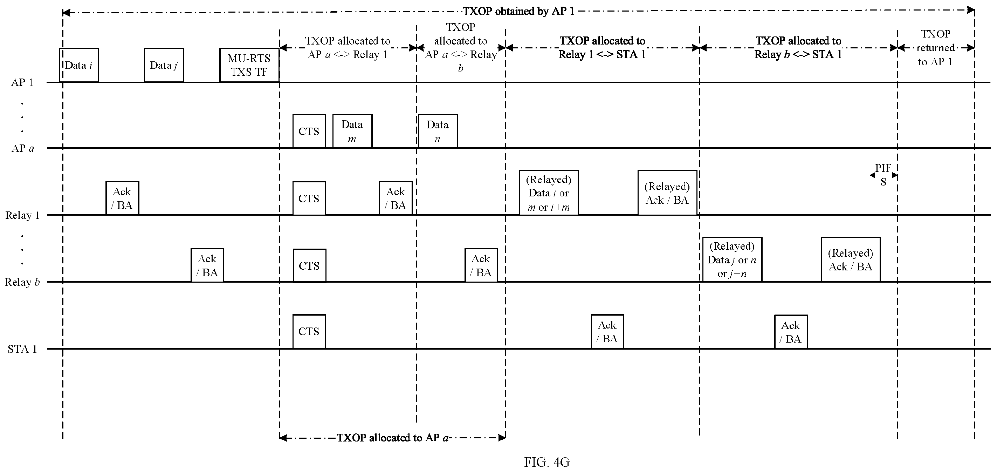

FIG. 4G is a schematic diagram of a scenario for scheduling and transmission in relay communication, according to an embodiment of the present disclosure. As shown in FIG. 4G, a network scenario is depicted with a plurality of APs (i.e., AP1 ~ AP *a*) and a plurality of Relay nodes (i.e., Relay 1 ~ Relay *b*). These Relay nodes all provide a relay service for the same STA (i.e., STA1).

This example is described for a case where after AP1 obtains a TXOP, AP1 first sends data to Relay1 ~ Relay *b*, and then AP1 shares a portion of its obtained TXOP with other APs besides AP1 (e.g., AP *a* in the figure) and Relay1 ~ Relay *b* (and STA1) for relay transmission (e.g., AP *a* transmits data to Relay1, and Relay 1 ~ Relay b transmit data to STA1). However, the present disclosure is not limited to this process. It is also possible that after AP1 obtains the TXOP, it first shares a portion of the TXOP with Relay 1 ~ Relay *b* (and STA1) for relay transmission (e.g., STA1 transmits data to Relay 1 ~ Relay *b*), and then transmission between Relay1 ~ Relay *b* and AP1 and/or AP *a* is performed (e.g., Relay 1 ~ Relay *b* transmit data to AP1 and/or AP *a*).

The operations of FIG. 4G are as follows (the present disclosure is not limited to the following process; it is also possible to execute only some of the steps or to change the order of some steps):
1) After AP1 obtains the TXOP, it sends a data frame (e.g., Data *i*). The RA of Data *i* is set to the MAC address of Relay1, the TA is set to the MAC address of AP1, the SA is set to the MAC address of AP1, and the DA is set to the MAC address of STA1. This indicates that the data frame originates from AP1, is transmitted by AP1 to Relay1, and is destined for STA1.
2) Relay1 receives Data *i* sent by AP1 and, after a SIFS interval, replies to AP1 with an Ack/BlockAck frame, indicating that Relay1 has received Data *i* that AP1 requested to be forwarded. If an Ack frame is sent, the RA is set to the MAC address of AP1, and there is no TA. If a BlockAck frame is sent, the RA is set to the MAC address of AP1, and the TA is set to the MAC address of Relay1. It should be noted that this step may be omitted; that is, if Relay1 has not yet successfully forwarded Data *i*, it may not send a confirmation to AP1.
3) Within the obtained TXOP, AP1 sends Data *j*. The RA of Data *j* is set to the MAC address of Relay *b*, the TA is set to the MAC address of AP1, the SA is set to the MAC address of AP1, and the DA is set to the MAC address of STA1. This indicates that the data frame originates from AP1, is transmitted by AP1 to Relay *b*, and is destined for STA1.
4) Relay *b* receives Data *j* sent by AP1 and, after a SIFS interval, replies to AP1 with an Ack/BlockAck frame to indicate that Relay *b* has received Data *j* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay *b*. It should be noted that this step may be omitted; that is, if Relay *b* has not yet successfully forwarded Data *j*, it may not send a confirmation to AP1.
5) AP1 sends a MU-RTS TXS TF to AP a and Relay 1~Relay *b* (and STA1). AP1 shares a portion of the TXOP it has obtained (the specific time is indicated in this MU-RTS TXS TF) with AP *a* and Relay 1~Relay *b* (and STA1) for use. In the MU-RTS TXS TF, the TA is set to the MAC address of AP1, and the RA can be set to a multicast address or a broadcast address. The User Info field within the User Info List in the MU-RTS TXS TF indicates the specific target recipients are AP *a* and Relay 1 to Relay *b* (and STA1). Specific time: The Allocation Duration field of the User Info field of the MU-RTS TXS TF indicates the duration of the time shared with other devices (e.g., AP *a* and/or Relay 1 to Relay *b* and/or STA1).
6) A SIFS interval after AP1 sends the MU-RTS TXS TF, AP *a* and Relay 1~Relay *b* (and STA1) all reply with a CTS frame to AP1 to indicate acceptance and use of the TXOP shared by AP1. In the CTS frames sent by AP *a* and Relay 1~Relay *b* (and STA1), the RA is set to the MAC address of AP1. It should be noted that STA1 may be outside the signal coverage range of AP1. In this case, STA1 cannot receive the MU-RTS TXS TF sent by AP1 and will not reply with a CTS frame. Only AP *a* and the relays among Relay 1 to Relay *b* that received the MU-RTS TXS TF sent by AP1 reply with a CTS frame.
7) AP *a* sends Data *m* to be relayed by Relay 1. For this relayed Data *m*, the RA is set to the MAC address of Relay 1, the TA is set to the MAC address of AP *a*, the source address (SA) is set to the MAC address of AP *a*, and the destination address (DA) is set to the MAC address of STA 1. This indicates that Data *m* originates from AP *a* and is transmitted by Relay 1 to the destination node, STA 1.
8) Relay 1 receives Data *m* sent by AP *a* and, after a SIFS interval, replies to AP *a* with an Ack/BlockAck frame to indicate that Relay 1 has received Data *m* that AP *a* requested to be forwarded. If it is an Ack frame, the RA is set to the MAC address of AP *a*, and there is no TA. If it is a BlockAck frame, the RA is set to the MAC address of AP *a*, and the TA is set to the MAC address of Relay 1. It should be noted that this step may be omitted; that is, if Relay 1 has not yet successfully forwarded Data *m*, it may not send a confirmation to AP a.
9) AP *a* sends Data n to be relayed by Relay *b*. For this relayed Data *n,* the RA is set to the MAC address of Relay *b*, the TA is set to the MAC address of AP *a*, the SA is set to the MAC address of AP *a,* and the DA is set to the MAC address of STA 1. This indicates that Data *n* originates from AP *a* and is transmitted by Relay *b* to the destination node, STA 1.
10) Relay *b* receives Data *n* sent by AP *a* and, after a SIFS interval, replies to AP *a* with an Ack/BlockAck frame to indicate that Relay *b* has received Data *n* that AP *a* requested to be forwarded. If it is an Ack frame, the RA is set to the MAC address of AP *a*, and there is no TA. If it is a BlockAck frame, the RA is set to the MAC address of AP *a,* and the TA is set to the MAC address of Relay *b*. It should be noted that this step may be omitted; that is, if Relay *b* has not yet successfully forwarded Data n, it is not required to send a confirmation to AP *a*.
11) Relay 1 sends a relayed Data frame (which can be part or all of Data *i* requested by AP 1 to be relayed, part or all of Data *m* requested by AP *a* to be relayed, or part or all of Data *i* + Data*m* requested by AP 1 and AP *a* to be forwarded; the present disclosure is not limited thereto). The RA of this relayed Data frame is set to the MAC address of STA 1, the TA is set to the MAC address of Relay 1, the SA is set to the MAC address of AP 1 and/or AP *a*, and the DA is set to the MAC address of STA 1. This indicates that the Data frame originates from AP 1 and/or AP *a* and is transmitted by Relay 1 to the destination node, STA 1.
12) STA 1 receives the relayed Data frame sent by Relay 1 and, after a SIFS interval, replies to Relay 1 with an Ack/BlockAck frame to indicate that STA 1 has received the Data frame forwarded by Relay 1. If it is an Ack frame, the RA is set to the MAC address of Relay 1, and there is no TA. If it is a BlockAck frame, the RA is set to the MAC address of Relay 1, and the TA is set to the MAC address of STA 1.
13) Relay 1 receives the Ack/BlockAck frame sent by STA 1 and, after a SIFS interval, sends a relayed Ack/BlockAck frame to AP 1 and/or AP a to indicate that STA 1 has successfully received the Data frame that AP 1 and/or AP *a* requested Relay 1 to forward. If a relayed Ack frame is sent, the RA is set to the MAC address of AP 1 and/or AP *a*, and there is no TA. If a relayed BlockAck frame is sent, the RA is set to the MAC address of AP 1 and/or AP *a*, and the TA is set to the MAC address of Relay 1.
14) Relay *b* sends a relayed Data frame (which can be part or all of Data *j* requested by AP 1 to be relayed, part or all of Data *n* requested by AP *a* to be relayed, or part or all of Data *j* + Data*n* requested by AP 1 and AP *a* to be forwarded; the present disclosure is not limited thereto). The RA of this relayed Data frame is set to the MAC address of STA 1, the TA is set to the MAC address of Relay *b*, the SA is set to the MAC address of AP 1 and/or AP *a*, and the DA is set to the MAC address of STA 1. This indicates that the Data frame originates from AP 1 and/or AP *a* and is transmitted by Relay *b* to the destination node, STA 1.
15) STA 1 receives the relayed Data frame sent by Relay *b* and, after a SIFS interval, replies to Relay *b* with an Ack/BlockAck frame to indicate that STA 1 has received the Data frame forwarded by Relay *b*. If it is an Ack frame, the RA is set to the MAC address of Relay *b*, and there is no TA. If it is a BlockAck frame, the RA is set to the MAC address of Relay *b*, and the TA is set to the MAC address of STA 1.
16) Relay *b* receives the Ack/BlockAck frame sent by STA 1 and, after a SIFS interval, sends a relayed Ack/BlockAck frame to AP 1 and/or AP *a* to indicate that STA 1 has successfully received the Data frame that AP 1 and/or AP *a* requested Relay *b* to forward. If a relayed Ack frame is sent, the RA is set to the MAC address of AP 1 and/or AP *a*, and there is no TA. If a relayed BlockAck frame is sent, the RA is set to the MAC address of AP 1 and/or AP *a*, and the TA is set to the MAC address of Relay *b*.
17) After the relay transmission within the TXOP shared by AP 1 is completed, if time still remains, AP *a* and/or Relay 1 to Relay *b* and/or STA 1 can actively send a use termination frame (e.g., a CF-End frame or another frame) to AP 1 to return the remaining TXOP time for use by AP 1. Alternatively, AP 1, upon detecting via CCA that the channel has been idle for a duration greater than or equal to a PIFS duration, actively reclaims the right to use the TXOP and continues with other operations.

MAC address: If Relay 1 simultaneously relays part or all of Data *i* + Data *m* requested for forwarding by AP 1 and AP *a*, or if Relay *b* simultaneously relays part or all of Data *j* + Data *n* requested for forwarding by AP 1 and AP *a*, then the SA can be handled by one of the following two methods:
i. The SA is set to the multicast address corresponding to AP 1 and AP *a*. (This requires prior negotiation of multicast address information with Relay 1 to Relay *b* and STA 1).
ii. The MAC addresses of AP 1 and AP *a* are carried separately in the Data frame (including the SA).

The effects achievable by this embodiment are as follows. In a scenario with a plurality of APs, a plurality of Relay nodes, and one STA, this embodiment, on the one hand, enables a plurality of APs to provide a relay service for the one STA through a plurality of different Relay nodes. On the other hand, after one AP obtains a TXOP, it can directly schedule transmissions between one or more other APs and one or more Relay nodes. This eliminates the need for the other APs, Relay nodes, and the STA to individually compete for channel access rights, as the scheduled devices can then perform transmissions between APs and Relay nodes and/or between Relay nodes and STAs. This reduces the latency of relay transmission to a certain extent.

### Scenario 8: Scheduling and transmission among multiple APs, multiple Relay nodes, and multiple STAs.

In some embodiments of the present disclosure, the first node, the relay communication device, and the at least one second node include a plurality of first nodes (APs), a plurality of relay communication devices (Relay nodes), and a plurality of second nodes (STAs). The plurality of first nodes provide a relay service for at least one of the plurality of second nodes through the plurality of relay communication devices. The MU-RTS-TXS TF further indicates that after one first node obtains a TXOP, a transmission between the relay communication device and another one or more first nodes is scheduled, and a portion of the obtained TXOP is shared with the another one or more first nodes for use.

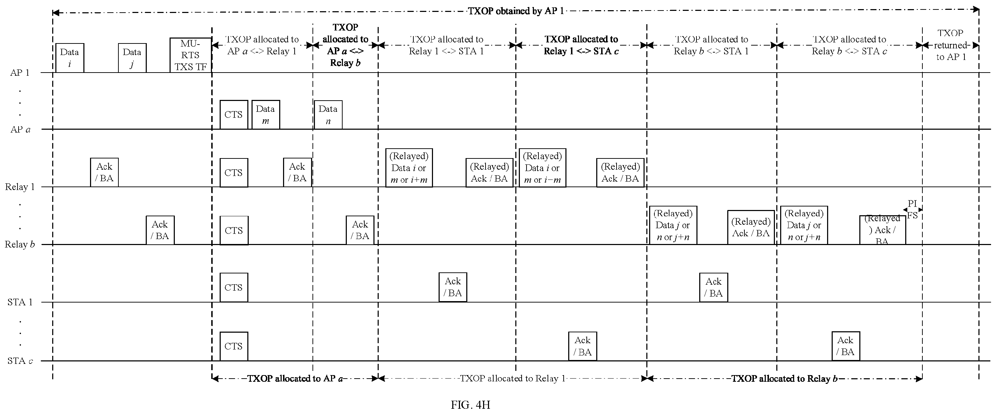

FIG. 4H is a schematic diagram of a scenario for scheduling and transmission in relay communication according to an embodiment of the present disclosure. As shown in FIG. 5.3.9, the network includes a plurality of APs (i.e., AP 1 to AP *a*), a plurality of Relays (i.e., Relay 1 to Relay *b*), and a plurality of STAs (i.e., STA 1 to STA *c*). The plurality of Relays can all provide a relay service to the plurality of STAs (i.e., STA 1 to STA *c*).

This example illustrates a case where after AP 1 obtains a TXOP, AP 1 first sends data to Relay 1~Relay *b*. Then, AP 1 shares a portion of its obtained TXOP with other APs besides AP 1 (e.g., AP *a* in the figure) and Relay 1~Relay *b* (and STA 1~STA *c*) for relay transmission (e.g., AP *a* transmits data to Relay 1, and Relay 1~Relay *b* transmit data to STA 1~STA *c*). However, the present disclosure is not limited to this process. Alternatively, after AP 1 obtains the TXOP, it may first share a portion of the TXOP with Relay 1 to Relay *b* (and STA 1 to STA *c*) for relay transmission (e.g., STA 1~STA *c* transmit data to Relay 1~ Relay *b*), and then transmission between Relay 1~ Relay b and AP 1 and/or AP a is performed (e.g., Relay 1~Relay b transmit data to AP 1 and/or AP a).

The operations of FIG. 4H are as follows (the present disclosure is not limited to the following flow; some steps may be omitted, or the order of some steps may be changed):
1) After obtaining the TXOP, AP1 sends a Data frame (e.g., Data *i*). For Data *i*, the RA is set to the MAC address of Relay1, the TA is set to the MAC address of AP1, the SA is set to the MAC address of AP1, and the DA is set to the MAC address of STA1. This indicates that the Data frame originates from AP1, is sent by AP1 for reception by Relay1, and its destination node is STA1.
2) When receiving Data *i* sent by AP1, Relay1 replies to AP1 with an Acknowledgement (Ack)/BlockAck frame after a SIFS time, indicating that Relay1 has received Data *i* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay1. It should be noted that this step may be omitted; that is, at this point, Relay1 has not yet successfully forwarded Data *i* and does not need to send a confirmation to AP1.
3) Within the obtained TXOP, AP1 sends Data *j*. For Data *j*, the RA is set to the MAC address of Relay *b*, the TA is set to the MAC address of AP1, the SA is set to the MAC address of AP1, and the DA is set to the MAC address of STA1. This indicates that the Data frame originates from AP1, is sent by AP1 for reception by Relay *b*, and its destination node is STA1.
4) When receiving Data *j* sent by AP1, Relay *b* replies to AP1 with an Ack/BlockAck frame after a SIFS time, indicating that Relay *b* has received Data *j* that AP1 requested to be forwarded. If it is an Ack frame, the RA is set to the MAC address of AP1, and there is no TA. If it is a BlockAck frame, the RA is set to the MAC address of AP1, and the TA is set to the MAC address of Relay *b.* It should be noted that this step may be omitted; that is, at this point, Relay *b* has not yet successfully forwarded Data *j* and does not need to send a confirmation to AP1.
5) AP1 sends an MU-RTS-TXS TF to AP *a* and Relay 1~Relay *b* (and STA 1~STA *c*). AP1 shares a portion of the TXOP it has obtained (the specific duration is indicated in this MU-RTS-TXS TF) with AP *a* and Relay 1~Relay *b* (and STA 1~STA c) for their use. In the MU-RTS-TXS TF, the TA is set to the MAC address of AP1, and the RA can be set to a multicast or broadcast address. The User Info field within the User Info List in the MU-RTS-TXS TF indicates the specific target recipients, which are AP *a* and Relay 1~Relay *b* (and STA 1~STA c). Specifically, the Allocation Duration field of the User Info field in the MU-RTS-TXS TF indicates the length of time shared with other devices (e.g., AP *a* and/or Relay 1~Relay *b* and/or STA 1~STA *c*).
6) A SIFS time after AP1 sends the MU-RTS-TXS TF, AP *a* and Relay 1-Relay *b* (and STA 1-STA *c*) all reply to AP1 with a CTS frame to indicate acceptance and use of the TXOP shared by AP1. The RA of the CTS frames sent by AP *a* and Relay 1~Relay *b* (and STA 1~STA *c*) are all set to the MAC address of AP1. It should be noted that some or all of the STAs from STA 1 to STA *c* may not be within the signal coverage of AP1. In this case, any STA that does not receive the MU-RTS-TXS TF from AP1 will not reply with a CTS frame. Only the nodes among AP *a,* Relay 1 to Relay *b,* and STA 1 to STA *c* that receive the MU-RTS-TXS TF from AP1 will reply with a CTS frame.
7) AP *a* sends Data *m*, which needs to be relayed by Relay1. For this Data *m*, the RA is set to the MAC address of Relay1, the TA is set to the MAC address of AP *a,* the SA is set to the MAC address of AP *a,* and the DA is set to the MAC address of STA1 and/or STA *c.* This indicates that Data *m* originates from AP *a,* is sent by AP *a* for reception by Relay1, and its destination node is STA1 and/or STA c.
8) When receiving Data *m* sent by AP *a,* Relay1 replies to AP *a* with an Ack/BlockAck frame after a SIFS time, indicating that Relay1 has received Data *m* that AP *a* requested to be forwarded. If it is an Ack frame, the RA is set to the MAC address of AP *a,* and there is no TA. If it is a BlockAck frame, the RA is set to the MAC address of AP *a,* and the TA is set to the MAC address of Relay1. It should be noted that this step may be omitted; that is, at this point, Relay1 has not yet successfully forwarded Data *m* and does not need to send a confirmation to AP *a.*
9) AP *a* sends Data *n,* which needs to be relayed by Relay *b.* For this Data *n,* the RA is set to the MAC address of Relay *b,* the TA is set to the MAC address of AP *a,* the SA is set to the MAC address of AP *a,* and the DA is set to the MAC address of STA 1 and/or STA c. This indicates that Data *n* originates from AP *a,* is sent by AP *a* for reception by Relay *b,* and its final destination node is STA 1 and/or STA *c.*
10) When receiving Data *n* sent by AP *a,* Relay *b* replies to AP *a* with an Ack/BlockAck frame after a SIFS time, indicating that Relay *b* has received Data *n* that AP *a* requested to be forwarded. If it is an Ack frame, the RA is set to the MAC address of AP *a,* and there is no TA. If it is a BlockAck frame, the RA is set to the MAC address of AP *a,* and the TA is set to the MAC address of Relay *b.* It should be noted that this step may be omitted; that is, at this point, Relay *b* has not yet successfully forwarded Data *n* and does not need to send a confirmation to AP *a.*
11) Relay 1 sends a relayed Data frame (which can be part or all of Data *i* requested by AP 1 for relay, part or all of Data *m* requested by AP *a* for relay, or part or all of Data *i* + Data*m* requested by AP 1 and AP *a* for forwarding; the present disclosure is not limited in this regard). For this relayed Data frame, the RA is set to the MAC address of STA 1, the TA is set to the MAC address of Relay 1, the SA is set to the MAC address of AP 1 and/or AP *a*, and the DA is set to the MAC address of STA 1. This indicates that the Data frame originates from AP 1 and/or AP a, is sent by Relay 1 for reception by STA 1, and the destination node is STA 1.
12) When receiving the relayed Data frame sent by Relay 1, STA 1 replies to Relay 1 with an Ack/BlockAck frame after a SIFS time, indicating that STA 1 has received the Data frame forwarded by Relay 1. If it is an Ack frame, the RA is set to the MAC address of Relay 1, and there is no TA. If it is a BlockAck frame, the RA is set to the MAC address of Relay 1, and the TA is set to the MAC address of STA 1.
13) When receiving the Ack/BlockAck frame sent by STA 1, Relay 1 sends a relayed Ack/BlockAck frame to AP 1 and/or AP *a* after a SIFS time, indicating that STA 1 has successfully received the Data frame that AP 1 and/or AP *a* requested Relay 1 to forward. If it is a relayed Ack frame, the RA is set to the MAC address of AP 1 and/or AP *a*, and there is no TA. If it is a relayed BlockAck frame, the RA is set to the MAC address of AP 1 and/or AP *a*, and the TA is set to the MAC address of Relay 1.
14) Relay 1 sends a relayed Data frame (which may be part or all of Data *i* requested for relay by AP 1, part or all of Data *m* requested for relay by AP *a*, or part or all of Data *i* + Data*m* requested for forwarding by AP 1 and AP *a*; the present disclosure is not limited thereto). In the relayed Data frame, the RA is set to the MAC address of STA *c*, the TA is set to the MAC address of Relay 1, the SA is set to the MAC address of AP 1 and/or AP *a*, and the DA is set to the MAC address of STA 1. This indicates that the Data frame originates from AP 1 and/or AP *a*, is transmitted by Relay 1 to be received by STA *c*, and the destination node is STA *c*.
15) When receiving the relayed Data frame from Relay 1, STA *c* waits for a SIFS and then replies to Relay 1 with an Ack/BlockAck frame, indicating that STA *c* has received the Data frame forwarded by Relay 1. If an Ack frame is sent, its RA is set to the MAC address of Relay 1, and there is no TA. If a BlockAck frame is sent, its RA is set to the MAC address of Relay 1, and its TA is set to the MAC address of STA *c*.
16) When receiving the Ack/BlockAck frame from STA *c*, Relay 1 waits for a SIFS and then sends a relayed Ack/BlockAck frame to AP 1 and/or AP *a*. This indicates that STA *c* has successfully received the Data frame that AP 1 and/or AP *a* requested Relay 1 to forward. If a relayed Ack frame is sent, its RA is set to the MAC address of AP 1 and/or AP *a*, and there is no TA. If a relayed BlockAck frame is sent, its RA is set to the MAC address of AP 1 and/or AP *a*, and its TA is set to the MAC address of Relay 1.
17) Relay *b* sends a relayed Data frame (which may be part or all of Data *j* requested for relay by AP 1, part or all of Data *n* requested for relay by AP *a,* or part or all of Data *j* + Data*n* requested for forwarding by AP 1 and AP *a*; the present disclosure is not limited thereto). In this relayed Data frame, the RA is set to the MAC address of STA 1, the TA is set to the MAC address of Relay *b*, the SA is set to the MAC address of AP 1 and/or AP *a*, and the DA is set to the MAC address of STA 1. This indicates that the Data frame originates from AP 1 and/or AP *a*, is transmitted by Relay *b* to STA 1, and the destination node is STA 1.
18) When receiving the relayed Data frame from Relay *b*, STA 1 waits for a SIFS and then replies to Relay b with an Ack/BlockAck frame, indicating that STA 1 has received the Data frame forwarded by Relay *b*. If an Ack frame is sent, its RA is set to the MAC address of Relay *b*, and there is no TA. If a BlockAck frame is sent, its RA is set to the MAC address of Relay *b*, and its TA is set to the MAC address of STA 1.
19) When receiving the Ack/BlockAck frame from STA 1, Relay b waits for a SIFS and then sends a relayed Ack/BlockAck frame to AP 1 and/or AP *a*. This indicates that STA 1 has successfully received the Data frame that AP 1 and/or AP *a* requested Relay b to forward. If a relayed Ack frame is sent, its RA is set to the MAC address of AP 1 and/or AP *a*, and there is no TA. If a relayed BlockAck frame is sent, its RA is set to the MAC address of AP 1 and/or AP *a*, and its TA is set to the MAC address of Relay *b*.
20) Relay b sends a relayed Data frame (which may be part or all of Data *j* requested for relay by AP 1, part or all of Data *n* requested for relay by AP *a*, or part or all of Data *j* + Data n requested for forwarding by AP 1 and AP a; the present disclosure is not limited thereto). In this relayed Data frame, the RA is set to the MAC address of STA *a*, the TA is set to the MAC address of Relay *b*, the SA is set to the MAC address of AP 1 and/or AP *a*, and the DA is set to the MAC address of STA 1. This indicates that the Data frame originates from AP 1 and/or AP *a*, is transmitted by Relay b to be received by STA *c*, and the destination node is STA *c*.
21) When receiving the relayed Data frame from Relay *b*, STA *c* waits for a SIFS and then replies to Relay b with an Ack/BlockAck frame, indicating that STA *c* has received the Data frame forwarded by Relay *b*. If an Ack frame is sent, its RA is set to the MAC address of Relay *b*, and there is no TA. If a BlockAck frame is sent, its RA is set to the MAC address of Relay *b*, and its TA is set to the MAC address of STA *c*.
22) When receiving the Ack/BlockAck frame from STA *c*, Relay b waits for a SIFS and then sends a relayed Ack/BlockAck frame to AP 1 and/or AP *a*. This indicates that STA *c* has successfully received the Data frame that AP 1 and/or AP a requested Relay b to forward. If a relayed Ack frame is sent, its RA is set to the MAC address of AP 1 and/or AP *a*, and there is no TA. If a relayed BlockAck frame is sent, its RA is set to the MAC address of AP 1 and/or AP *a*, and its TA is set to the MAC address of Relay *b*.
23) If time remains after the relay transmission is completed within the TXOP shared by AP 1, then AP a and/or Relay 1 to Relay *b* and/or STA 1 to STA *c* may proactively send a use termination frame (e.g., a CF-End frame or another frame) to AP 1 to return the remaining TXOP time to AP 1 for its use. Alternatively, if AP 1 detects via CCA that the channel has been idle for a duration greater than or equal to a PIFS duration, AP 1 proactively reclaims the right to use the TXOP and proceeds with other operations.

MAC address: If Relay 1 simultaneously relays part or all of Data *i* + Data *m* requested for forwarding by AP 1 and AP *a*, or if Relay b simultaneously relays part or all of Data *j* + Data *n* requested for forwarding by AP 1 and AP *a*, then the SA can be handled by one of the following two methods:
i. The SA is set to the multicast address corresponding to AP 1 and AP a. (This requires prior negotiation of multicast address no-verification information with Relay 1 to Relay *b* and STA 1 to STA *c*.)
ii. The MAC addresses of AP 1 and AP *a* are carried separately in the Data frame (including the SA).

The effects achievable by this embodiment are as follows: In a scenario with multiple APs, multiple relay nodes, and multiple STAs, this embodiment, on one hand, enables multiple APs to provide a relay service to one or more STAs through multiple different relay nodes. On the other hand, after one AP obtains a TXOP, it can directly schedule transmissions between one or more other APs and one or more relay nodes. This eliminates the need for other APs, relay nodes, and STAs to contend for channel access rights separately, which would otherwise be required before transmissions between APs and relay nodes and/or between relay nodes and STAs could occur. Consequently, the latency of relay transmission is reduced to a certain extent.

### Scenario 9: Scheduling and transmission for multiple Aps, one relay node, and multiple STAs (example with a relay node obtaining a TXOP and sharing it)

In some embodiments of the present disclosure, the example of a relay node obtaining a TXOP and sharing it is also applicable to the scheduling and transmission for: scheduling and transmission among one AP, one relay node, and one STA; scheduling and transmission among one AP, one relay node, and multiple STAs; scheduling and transmission among one AP, multiple relay nodes, and one STA; scheduling and transmission among one AP, multiple relay nodes, and multiple STAs; scheduling and transmission among multiple APs, one relay node, and one STA; scheduling and transmission among multiple APs, multiple relay nodes, and one STA; scheduling and transmission among multiple APs, multiple relay nodes, and multiple STAs.

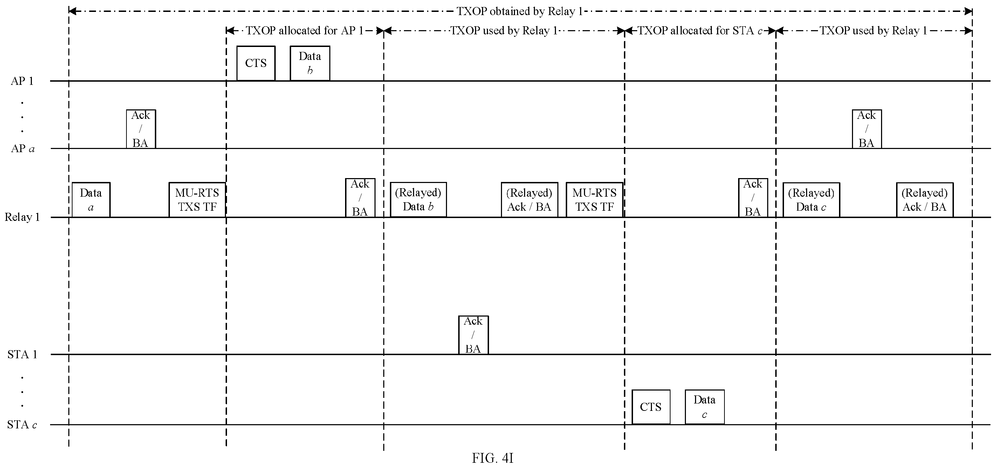

As shown in FIG. 4I, a network may include multiple APs (i.e., AP1 ~ AP*a*), one relay node (i.e., Relay1), and multiple STAs (i.e., STA 1 ~ STA*c*). This represents a scenario where the relay node provides a relay service to multiple STAs (i.e., STA 1 ~ STA*c*).

This example illustrates a case where Relay1 obtains a TXOP. As a non-AP STA, Relay1 has data (Data a) to send to AP *a*. Subsequently, Relay1 shares a portion of its obtained TXOP with an AP (e.g., AP1 in the figure) and an STA (e.g., STA *c* in the figure). For instance, AP1 transmits Data b to Relay1, and STA *c* transmits Data *c* to Relay1. However, the present disclosure is not limited to this process. For example, after obtaining the TXOP, Relay1 could first share a portion of the TXOP time with STA1 and then share another portion with AP *a.*

The operations corresponding to FIG. 4I are as follows (the present disclosure is not limited to the following sequence; some steps may be omitted, or the order of some steps may be changed):
1) After obtaining the TXOP, Relay1 sends a Data frame (e.g., Data *a*)*.* In this Data frame, the RA is set to the MAC address of AP *a*, the TA is set to the MAC address of Relay1, the SA is set to the MAC address of Relay1, and the DA is set to the MAC address of AP *a*. This indicates that the Data frame originates from Relay1, is transmitted by Relay1 to be received by AP *a*, and its destination node is AP *a*.
2) AP *a* receives Data *a* sent by Relay1, and after a SIFS time, replies to Relay1 with an Acknowledgement (Ack)/Block Ack frame, indicating that AP a has received Data a from Relay1. If it is an Ack frame, the RA is set to the MAC address of Relay1, and there is no TA. If it is a Block Ack frame, the RA is set to the MAC address of Relay1, and the TA is set to the MAC address of AP *a.* It is worth noting that this step may also not be present, for example, when Relay1 itself has no data to send to AP *a*.
3) Relay1 sends a MU-RTS-TXS TF to AP1. Relay1 shares a portion of the TXOP it obtained with AP1 for use, where the specific time is indicated in the MU-RTS-TXS TF. In the MU-RTS-TXS TF, the TA is set to the MAC address of Relay1, and the RA is set to the MAC address of AP1, a broadcast address, or a multicast address. If the RA is set to a broadcast address or a multicast address, the specific target recipient is indicated as AP1 by the User Info field within the User Info List in the MU-RTS-TXS TF.

Specific time: The Allocation Duration field of the User Info field of the MU-RTS-TXS TF indicates the length of time shared with other devices (for example, AP 1 ~ AP*a* and/or STA 1 ~ STA*c*).
4) S SIFS time after Relay1 sends the MU-RTS-TXS TF, AP1 replies with a CTS frame to Relay1, indicating acceptance and use of the TXOP shared by Relay1. In the CTS frame sent by AP1, the RA is set to the MAC address of Relay1.
5) AP1 sends Data *b* to be relayed by Relay1 to STA1. For this relayed Data *b*, the RA is set to the MAC address of Relay1, the TA is set to the MAC address of AP1, the SA is set to the MAC address of AP1, and the DA is set to the MAC address of STA1. This indicates that Data b originates from AP1, is transmitted by Relay1 to STA1, and the destination node is STA1.
6) Relay1 receives Data *b* sent by AP1, and after a SIFS time, replies to AP1 with an Ack/Block Ack frame, indicating that Relay1 has received Data *b* that AP1 requested to be forwarded. If it is an Ack frame, the RA is set to the MAC address of AP1, and there is no TA. If it is a Block Ack frame, the RA is set to the MAC address of AP1, and the TA is set to the MAC address of Relay1. It is worth noting that this step may also not be present, for example, when Relay1 has not yet successfully completed the forwarding of Data b and does not need to send a confirmation to AP1.
7) After the time shared with AP1 (that is, TXOPallocatedforAP1 in the figure) ends, Relay1 (within TXOPusedbyRelay1) resumes its role as the TXOP holder and sends a relayed Data frame (which may be part or all of Data *b* requested for relay by AP1; the present disclosure is not limited in this regard). For this relayed Data frame, the RA is set to the MAC address of STA1, the TA is set to the MAC address of Relay1, the SA is set to the MAC address of AP1, and the DA is set to the MAC address of STA1. This indicates that the Data frame originates from AP1, is transmitted by Relay1 to STA1, and the destination node is STA1.
8) STA1 receives the relayed Data frame sent by Relay1, and after a SIFS time, replies to Relay1 with an Ack/Block Ack frame, indicating that STA1 has received the Data frame forwarded by Relay1. If it is an Ack frame, the RA is set to the MAC address of Relay1, and there is no TA. If it is a Block Ack frame, the RA is set to the MAC address of Relay1, and the TA is set to the MAC address of STA1.
9) Relay1 receives the Ack/Block Ack frame sent by STA1, and after a SIFS time, sends a relayed Ack/Block Ack frame to AP1, indicating that STA1 has successfully received the Data frame that AP1 requested Relay1 to forward. If a relayed Ack frame is sent, the RA is set to the MAC address of AP1, and there is no TA. If a relayed Block Ack frame is sent, the RA is set to the MAC address of AP1, and the TA is set to the MAC address of Relay1.
10) Relay1 (within TXOPusedbyRelay1) continues to send an MU-RTS-TXS TF to STA *c*. Relay1 shares a portion of the TXOP it obtained with STA *c* for use, where the specific time is indicated in the MU-RTS-TXS TF. In the MU-RTS-TXS TF, the TA is set to the MAC address of Relay1, and the RA is set to the MAC address of STA *c*, a broadcast address, or a multicast address. If the RA is set to a broadcast address or a multicast address, the specific target recipient is indicated as STA *c* by the User Info field within the User Info List in the MU-RTS-TXS TF. Specific time: The Allocation Duration field of the User Info field of the MU-RTS-TXS TF indicates the length of time shared with other devices (for example, AP 1 ~ AP*a* and/or STA 1 ~ STA *c*).
11) S SIFS time after Relay1 sends the MU-RTS-TXS TF, STA *c* replies with a CTS frame to Relay1, indicating acceptance and use of the TXOP shared by Relay1. In the CTS frame sent by STA *c*, the RA is set to the MAC address of Relay1.
12) STA *c* sends Data *c* to be relayed by Relay1 to AP a. For this relayed Data *c*, the RA is set to the MAC address of Relay1, the TA is set to the MAC address of STA *c*, the SA is set to the MAC address of STA *c*, and the DA is set to the MAC address of AP *a*. This indicates that Data *c* originates from STA *c*, is transmitted by Relay1 to AP *a*, and the destination node is AP a.
13) Relay1 receives Data *c* sent by STA *c*, and after a SIFS time, Relay1 replies to STA *c* with an Ack/Block Ack frame, indicating that Relay1 has received Data *c* that STA *c* requested to be forwarded. If it is an Ack frame, the RA is set to the MAC address of STA *c*, and there is no TA. If it is a Block Ack frame, the RA is set to the MAC address of STA *c*, and the TA is set to the MAC address of Relay1. It is worth noting that this step may also not be present, for example, when Relay1 has not yet successfully completed the forwarding of Data *c* and does not need to send a confirmation to STA *c*.
14) Relay1 sends a relayed Data frame (which may be part or all of Data *c* requested for relay by STA *a*; the present disclosure is not limited in this regard). For this relayed Data frame, the RA is set to the MAC address of AP *a*, the TA is set to the MAC address of Relay1, the SA is set to the MAC address of STA *c*, and the DA is set to the MAC address of AP *a.* This indicates that the Data frame originates from STA *c*, is transmitted by Relay1 to AP *a*, and the destination node is AP *a.*
15) AP *a* receives the relayed Data frame sent by Relay1, and after a SIFS time, replies to Relay1 with an Ack/Block Ack frame, indicating that AP *a* has received the Data frame forwarded by Relay1. If it is an Ack frame, the RA is set to the MAC address of Relay1, and there is no TA. If it is a Block Ack frame, the RA is set to the MAC address of Relay1, and the TA is set to the MAC address of AP *a*.
16) Relay1 receives the Ack/Block Ack frame sent by AP *a* , and after a SIFS time, sends a relayed Ack/Block Ack frame to STA *c*, indicating that AP *a* has successfully received the Data frame that STA *c* requested Relay1 to forward. If a relayed Ack frame is sent, the RA is set to the MAC address of STA *c*, and there is no TA. If a relayed Block Ack frame is sent, the RA is set to the MAC address of STA *c*, and the TA is set to the MAC address of Relay1.

The effects that can be achieved by this embodiment are as follows: In a scenario with multiple APs, one relay node, and multiple STAs, on the one hand, this embodiment enables multiple APs to provide a relay service for one or more STAs through the same relay node. On the other hand, after a relay node obtains a TXOP, it can directly schedule transmissions between another one or more APs and the relay node, as well as schedule transmissions between another one or more STAs and the relay node. This eliminates the need for APs and STAs to contend for channel access rights separately. After an AP, relay node, or STA successfully obtains a TXOP, transmissions between the AP and the relay node and/or between the relay node and the STA can then occur. To a certain extent, this reduces the latency of relay transmission.

FIG. 5 is a schematic structural diagram of a wireless communication device 500 provided by an embodiment of the present disclosure. The wireless communication device may be a relay communication device, an AP, or a STA. The wireless communication device 500 shown in FIG. 5 includes a processor 510. The processor 510 is configured to call and run a computer program from a memory to implement the methods in the embodiments of the present disclosure. In some embodiments of the present disclosure, an AP includes an AP STA or an AP Multi-Link Device (MLD), and an STA includes an AP STA, a non-AP STA, an AP MLD, or a non-AP MLD.

Optionally, as shown in FIG. 5, the wireless communication device 500 may also include a memory 520. The processor 510 is configured to call and run a computer program from the memory 520 to implement the methods in the embodiments of the present disclosure. The memory 520 may be a separate device independent of the processor 510, or may be integrated into the processor 510.

Optionally, as shown in FIG. 5, the wireless communication device 500 may also include a transceiver 530. The processor 510 is configured to control the transceiver 530 to communicate with other devices. Specifically, it can send information or data to other devices, or receive information or data sent by other devices. The transceiver 530 may include a transmitter and a receiver. The transceiver 530 may further include one or more antennas.

Optionally, the wireless communication device 500 may specifically be the relay communication device in the embodiments of the present disclosure, and the wireless communication device 500 can implement the corresponding processes performed by the relay communication device in the various methods of the embodiments of the present disclosure. For brevity, details are not repeated here.

Optionally, the wireless communication device 500 may specifically be the AP in the embodiments of the present disclosure, and the wireless communication device 500 can implement the corresponding processes performed by the AP in the various methods of the embodiments of the present disclosure. For brevity, details are not repeated here.

Optionally, the wireless communication device 500 may specifically be the STA in the embodiments of the present disclosure, and the wireless communication device 500 can implement the corresponding processes performed by the STA in the various methods of the embodiments of the present disclosure. For brevity, details are not repeated here. In some embodiments of the present disclosure, an STA includes an AP STA, a non-AP STA, an AP MLD, or a non-AP MLD.

FIG. 6 is a schematic structural diagram of a chip according to an embodiment of the present disclosure. The chip 600 shown in FIG. 6 includes a processor 610. The processor 610 is configured to call and run a computer program from a memory to implement the methods in the embodiments of the present disclosure.

Optionally, as shown in FIG. 6, the chip 600 may also include a memory 620. The processor 610 is configured to call and run a computer program from the memory 620 to implement the methods in the embodiments of the present disclosure. The memory 620 may be a separate device independent of the processor 610, or may be integrated into the processor 610.

Optionally, the chip 600 may also include an input interface 630. The processor 610 is configured to control the input interface 630 to communicate with other devices or chips. Specifically, it can obtain information or data sent by other devices or chips.

Optionally, the chip 600 may also include an output interface 640. The processor 610 is configured to control the output interface 640 to communicate with other devices or chips. Specifically, it can output information or data to other devices or chips.

Optionally, the chip can be applied to the relay communication device in the embodiments of the present disclosure, and the chip can implement the corresponding processes performed by the relay communication device in the various methods of the embodiments of the present disclosure. For the sake of brevity, details are not repeated here.

Optionally, the chip may be applied to the AP in embodiments of the present disclosure, and the chip can implement the corresponding processes performed by the AP in the various methods according to embodiments of the present disclosure. For brevity, details thereof are not described herein again.

Optionally, the chip may be applied to the STA in embodiments of the present disclosure, and the chip can implement the corresponding processes performed by the STA in the various methods according to embodiments of the present disclosure. For brevity, details thereof are not described herein again.

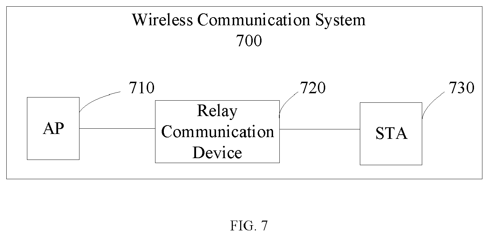

FIG. 7 is a schematic block diagram of a wireless communication system 700 according to an embodiment of the present disclosure. As shown in FIG. 7, the communication system 700 includes an AP 710, a relay communication device 720, and an STA 730. The AP 710 may be configured to implement the corresponding functions performed by an AP in the methods described above; the relay communication device 720 may be configured to implement the corresponding functions performed by a relay communication device in the methods described above; and the STA 730 may be configured to implement the corresponding functions performed by an STA in the methods described above. For brevity, details thereof are not described herein again.

It should be understood that the processor in embodiments of the present disclosure may be an integrated circuit chip having a signal processing capability. In an implementation process, each step of the foregoing method embodiments can be performed by an integrated logic circuit of hardware in the processor or by instructions in the form of software.

It can be understood that the memory in embodiments of the present disclosure may be a volatile memory or a non-volatile memory, or may include both volatile and non-volatile memory. It should be noted that the memory of the systems and methods described herein is intended to include, but is not limited to, these and any other suitable types of memory. Embodiments of the present disclosure also provide a computer-readable storage medium for storing a computer program.

Optionally, the computer-readable storage medium may be applied to the relay communication device in embodiments of the present disclosure, and the computer program causes a computer to execute the corresponding processes performed by the relay communication device in the various methods according to embodiments of the present disclosure. For brevity, details thereof are not described herein again. Optionally, the computer-readable storage medium may be applied to the AP in embodiments of the present disclosure, and the computer program causes a computer to execute the corresponding processes performed by the AP in the various methods according to embodiments of the present disclosure. For brevity, details thereof are not described herein again. Optionally, the computer-readable storage medium may be applied to the STA in embodiments of the present disclosure, and the computer program causes a computer to execute the corresponding processes performed by the STA in the various methods according to embodiments of the present disclosure. For brevity, details thereof are not described herein again.

Embodiments of the present disclosure also provide a computer program product, including computer program instructions.

Optionally, the computer program product may be applied to the relay communication device in embodiments of the present disclosure, and the computer program instructions cause a computer to execute the corresponding processes performed by the relay communication device in the various methods according to embodiments of the present disclosure. For brevity, details thereof are not described herein again. Optionally, the computer program product may be applied to the AP in embodiments of the present disclosure, and the computer program instructions cause a computer to execute the corresponding processes performed by the AP in the various methods according to embodiments of the present disclosure. For brevity, details thereof are not described herein again. Optionally, the computer program product may be applied to the STA in embodiments of the present disclosure, and the computer program instructions cause a computer to execute the corresponding processes performed by the STA in the various methods according to embodiments of the present disclosure. For brevity, details thereof are not described herein again.

Embodiments of the present disclosure also provide a computer program.

Optionally, the computer program may be applied to the relay communication device in embodiments of the present disclosure. When the computer program is run on a computer, it causes the computer to execute the corresponding processes performed by the relay communication device in the various methods according to embodiments of the present disclosure. For brevity, details thereof are not described herein again. Optionally, the computer program may be applied to the AP in embodiments of the present disclosure. When the computer program is run on a computer, it causes the computer to execute the corresponding processes performed by the AP in the various methods according to embodiments of the present disclosure. For brevity, details thereof are not described herein again. Optionally, the computer program may be applied to the STA in embodiments of the present disclosure. When the computer program is run on a computer, it causes the computer to execute the corresponding processes performed by the STA in the various methods according to embodiments of the present disclosure. For brevity, details thereof are not described herein again.

A person of ordinary skill in the art will appreciate that the units and algorithm steps of the examples described in the embodiments disclosed herein can be implemented by electronic hardware, or a combination of computer software and electronic hardware. Whether these functions are performed by hardware or software depends on the particular application and design constraints of the technical solution. A person skilled in the art may use different methods to implement the described functions for each particular application, but such implementation should not be considered to be beyond the scope of the present disclosure.

The foregoing are merely specific embodiments of the present disclosure. However, the scope of protection of the present disclosure is not limited thereto. Any variation or replacement readily conceivable by a person skilled in the art within the technical scope disclosed in the present disclosure shall fall within the scope of protection of the present disclosure. Therefore, the scope of protection of the present disclosure shall be determined by the scope of the claims.

## Claims

1. A relay communication device, comprising:
a relay function unit, configured to perform local reception or selective forwarding of a Media Access Control Protocol Data Unit (MPDU) between an upstream node and a downstream node based on a destination address (DA) of a received frame; and
an Aggregate Media Access Control Protocol Data Unit (A-MPDU) de-aggregation unit, configured to communicate with the relay function unit;
wherein when the A-MPDU de-aggregation unit receives a frame sent by the upstream node, the A-MPDU de-aggregation unit is configured to perform A-MPDU de-aggregation on the frame.

2. The relay communication device according to claim 1, further comprising an MPDU header and Cyclic Redundancy Check (CRC) verification unit, configured to communicate with the A-MPDU de-aggregation unit;
wherein when the MPDU header and CRC verification unit receives the frame sent by the upstream node via the A-MPDU de-aggregation unit, the MPDU header and CRC verification unit is configured to perform MPDU header and CRC verification on the frame.

3. The relay communication device according to claim 2, further comprising an address filtering unit, configured to communicate with the MPDU header and CRC verification unit;
wherein when the address filtering unit receives the frame sent by the upstream node via the MPDU header and CRC verification unit, the address filtering unit is configured to perform address filtering on the frame.

4. The relay communication device according to claim 3, further comprising a block acknowledgement scoreboard, configured to communicate with the address filtering unit;
wherein when the block acknowledgement scoreboard receives the frame sent by the upstream node via the address filtering unit, the block acknowledgement scoreboard is configured to perform acknowledgement scoring on the frame.

5. The relay communication device according to claim 4, further comprising a duplicate detection unit, configured to communicate with the block acknowledgement scoreboard;
wherein when the duplicate detection unit receives the frame sent by the upstream node via the block acknowledgement scoreboard, the duplicate detection unit is configured to perform duplicate detection on the frame.

6. The relay communication device according to claim 5, further comprising a replay detection unit, configured to communicate with the duplicate detection unit;
wherein when the replay detection unit receives the frame sent by the upstream node via the duplicate detection unit, the replay detection unit is configured to perform replay detection on the frame;
wherein the replay detection unit is configured to receive a data or robust management frame from another station (STA) to detect whether the received data or the robust management frame is an unauthorized retransmission.

7. The relay communication device according to any one of claims 1 to 6, further comprising an MPDU header and CRC creation unit, configured to communicate with the relay function unit;
wherein when the MPDU header and CRC creation unit receives a frame sent by the downstream node via the relay function unit, the MPDU header and CRC creation unit is configured to perform MPDU header and CRC creation on the frame.

8. The relay communication device according to claim 7, further comprising an A-MPDU aggregation unit, configured to communicate with the MPDU header and CRC creation unit;
wherein when the A-MPDU aggregation unit receives a frame sent by the downstream node via the MPDU header and CRC creation unit, the A-MPDU aggregation unit is configured to perform A-MPDU aggregation on the frame.

9. The relay communication device according to any one of claims 1 to 8, wherein the relay communication device is a non-Multi-Link Device (non-MLD) STA, the relay communication device further comprises an MPDU encryption and integrity unit, and the relay function unit is configured between the MPDU encryption and integrity unit and the MPDU header and CRC creation unit to perform transmission.

10. The relay communication device according to claim 9, wherein the relay communication device further comprises an MPDU decryption and integrity unit, and the relay function unit is configured between the replay detection unit and the MPDU decryption and integrity unit to perform reception.

11. The relay communication device according to any one of claims 1 to 8, wherein the relay communication device is a Multi-Link Device (MLD) STA, the relay communication device further comprises an MPDU encryption unit and a Traffic Identifier (TID)-to-link mapping unit, and the relay function unit is configured between the MPDU encryption unit and the TID-to-link mapping unit to perform transmission.

12. The relay communication device according to claim 11, wherein the relay communication device further comprises a link merging unit, and the relay function unit is configured between the link merging unit and the block acknowledgement scoreboard to perform reception.

13. The relay communication device according to claim 12, wherein the relay communication device further comprises an MLD upper Media Access Control (MAC) sublayer, and at least one of the relay function unit, the MPDU encryption unit, the TID-to-link mapping unit, the link merging unit, and the block acknowledgement scoreboard is configured in the MLD upper MAC sublayer.

14. The relay communication device according to any one of claims 1 to 13, wherein the frame is a unicast frame, a broadcast frame, or a multicast frame.

15. A relay communication method, performed by a relay communication device, comprising:
receiving a Multi-User Request-to-Send Transmission Opportunity Sharing Trigger Frame (MU-RTS-TXS TF) sent by a first node, wherein the MU-RTS-TXS TF indicates a transmission opportunity (TXOP) obtained by the first node; and
scheduling a transmission between the relay communication device and a plurality of second nodes and sharing a partial time of the obtained TXOP for use by the relay communication device and the plurality of second nodes.

16. The relay communication method according to claim 15, further comprising: determining an allocation strategy of the TXOP for the relay communication device and the plurality of second nodes.

17. The relay communication method according to claim 16, wherein the allocation strategy of the TXOP is determined by the first node based on a buffer status of the relay communication device and the plurality of second nodes.

18. The relay communication method according to claim 16, wherein the allocation strategy of the TXOP is determined by the relay communication device based on a buffer status of the first node and the plurality of second nodes.

19. The relay communication method according to claim 15, wherein the sharing the partial time of the obtained TXOP for use by the relay communication device and the plurality of second nodes comprises:
the relay communication device sending an indicative signaling to the plurality of second nodes to share the partial time of the TXOP for use by at least one of the plurality of second nodes, so as to receive data sent by the at least one of the plurality of second nodes within the partial time.

20. The relay communication method according to claim 15, wherein when a channel is idle for a duration of an inter-frame space (xIFS), the relay communication device receives data sent by the plurality of second nodes and relay the data to the first node;
wherein a length of the xIFS is greater than a length of a Short Inter-Frame Space (SIFS), and the length of the xIFS is less than or equal to a length of a Point Coordination Function Inter-Frame Space (PIFS).

21. The relay communication method according to claim 15, wherein the scheduling comprises:
receiving data to be transmitted and a receiver address (RA) or a destination address (DA) of the data to be transmitted; and
performing transmission of the data to be transmitted according to the RA or the DA.

22. The relay communication method according to claim 21, wherein a plurality of relay communication devices are provided, the RA of the data to be transmitted indicates the plurality of relay communication devices, and the DA of the data to be transmitted indicates the plurality of second nodes.

23. The relay communication method according to claim 21, wherein a plurality of relay communication devices are provided, RAs of the data to be transmitted indicates the plurality of relay communication devices, and the DA of the data to be transmitted indicates a same second node.

24. The relay communication method according to claim 21, wherein a plurality of relay communication devices are provided, the data to be transmitted comprises a plurality pieces of data to be transmitted, RAs of the plurality pieces of data to be transmitted respectively indicate the plurality of relay communication devices, and DAs of the plurality pieces of data to be transmitted respectively indicate the plurality of second nodes.

25. The relay communication method according to claim 21, wherein a plurality of relay communication devices are provided, the data to be transmitted comprises a plurality pieces of data to be transmitted, RAs of the plurality pieces of data to be transmitted respectively indicate the plurality of relay communication devices, and DAs of the plurality pieces of data to be transmitted indicate a same second node.

26. The relay communication method according to claim 15, further comprising:
the relay communication device performing data transmission with the first node before the obtaining the partial time of the TXOP.

27. The relay communication method according to claim 15, further comprising:
the relay communication device performing data transmission with the first node after the obtaining the partial time of the TXOP.

28. The relay communication method according to any one of claims 15 to 27, wherein the first node, the relay communication device, and the at least one second node comprise one first node, one relay communication device, and a plurality of second nodes, and the one relay communication device provides a relay service for the plurality of second nodes.

29. The relay communication method according to any one of claims 15 to 27, wherein the first node, the relay communication device, and the at least one second node comprise one first node, a plurality of relay communication devices, and one second node, and the plurality of relay communication devices provide a relay service for the one second node.

30. The relay communication method according to any one of claims 15 to 27, wherein the first node, the relay communication device, and the at least one second node comprise one first node, a plurality of relay communication devices, and a plurality of second nodes, and at least one of the plurality of relay communication devices provides a relay service for at least one of the plurality of second nodes.

31. The relay communication method according to any one of claims 15 to 27, wherein the first node, the relay communication device, and the at least one second node comprise a plurality of first nodes, one relay communication device, and one second node;
wherein the plurality of first nodes provide a relay service for the one second node through the one relay communication device;
wherein the MU-RTS-TXS TF further indicates that after one of the first nodes obtains the TXOP, a transmission between the one relay communication device and another one or more of the first nodes is scheduled and a partial time of the obtained TXOP is shared for use by the another one or more of the first nodes.

32. The relay communication method according to any one of claims 15 to 27, wherein the first node, the relay communication device, and the at least one second node comprise a plurality of first nodes, one relay communication device, and a plurality of second nodes;
wherein the plurality of first nodes provide a relay service for at least one of the plurality of second nodes through the one relay communication device;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

33. The relay communication method according to any one of claims 15 to 27, wherein the first node, the relay communication device, and the at least one second node comprise a plurality of first nodes, a plurality of relay communication devices, and one second node;
wherein the plurality of first nodes provide a relay service for the one second node through the plurality of relay communication devices;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

34. The relay communication method according to any one of claims 15 to 27, wherein the first node, the relay communication device, and the at least one second node comprise a plurality of first nodes, a plurality of relay communication devices, and a plurality of second nodes;
wherein the plurality of first nodes provide a relay service for at least one of the plurality of second nodes through the plurality of relay communication devices;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

35. A relay communication method, performed by a relay communication device, comprising:
sending a Multi-User Request-to-Send Transmission Opportunity Sharing Trigger Frame (MU-RTS-TXS TF) to at least one first node and/or at least one second node;
wherein the MU-RTS-TXS TF indicates that after the relay communication device obtains a transmission opportunity (TXOP), a transmission between a first node and the at least one second node is scheduled and a partial time of the obtained TXOP is shared for use by the first node and the at least one second node;
wherein at least one of the first node, the relay communication device, and the at least one second node is plural in number.

36. The relay communication method according to claim 35, further comprising:
the relay communication device performing data transmission with the first node and/or the at least one second node before obtaining the TXOP.

37. The relay communication method according to claim 35, further comprising:
the relay communication device performing data transmission with the first node and/or the at least one second node after obtaining the TXOP.

38. The relay communication method according to any one of claims 35 to 37, wherein the first node, the relay communication device, and the at least one second node comprise one first node, one relay communication device, and a plurality of second nodes;
wherein the one relay communication device provides a relay service for the plurality of second nodes.

39. The relay communication method according to any one of claims 35 to 37, wherein the first node, the relay communication device, and the at least one second node comprise one first node, a plurality of relay communication devices, and one second node;
wherein the plurality of relay communication devices provide a relay service for the one second node;
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

40. The relay communication method according to any one of claims 35 to 37, wherein the first node, the relay communication device, and the at least one second node comprise one first node, a plurality of relay communication devices, and a plurality of second nodes;
wherein at least one of the plurality of relay communication devices provides a relay service for at least one of the plurality of second nodes
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

41. The relay communication method according to any one of claims 35 to 37, wherein the first node, the relay communication device, and the at least one second node comprise a plurality of first nodes, one relay communication device, and one second node;
wherein the plurality of first nodes provide a relay service for the one second node through the one relay communication device.

42. The relay communication method according to any one of claims 35 to 37, wherein the first node, the relay communication device, and the at least one second node comprise a plurality of first nodes, one relay communication device, and a plurality of second nodes;
wherein the plurality of first nodes provide a relay service for at least one of the plurality of second nodes through the one relay communication device.

43. The relay communication method according to any one of claims 35 to 37, wherein the first node, the relay communication device, and the at least one second node comprise a plurality of first nodes, a plurality of relay communication devices, and one second node;
wherein the plurality of first nodes provide a relay service for the one second node through the plurality of relay communication devices;
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

44. The relay communication method according to any one of claims 35 to 37, wherein the first node, the relay communication device, and the at least one second node comprise a plurality of first nodes, a plurality of relay communication devices, and a plurality of second nodes;
wherein the plurality of first nodes provide a relay service for at least one of the plurality of second nodes through the plurality of relay communication devices;
wherein the MU-RTS-TXS TF further indicates that after one of the relay communication devices obtains a TXOP, a transmission between the first node and/or the at least one second node and another one or more relay communication devices is scheduled and a partial time of the obtained TXOP is shared for use by the another one or more relay communication devices.

45. A relay communication method, performed by a first node, comprising:
sending a Multi-User Request-to-Send Transmission Opportunity Sharing Trigger Frame (MU-RTS-TXS TF) to a relay communication device, wherein the MU-RTS-TXS TF indicates a transmission opportunity (TXOP) obtained by the first node; and
scheduling a transmission between the relay communication device and a plurality of second nodes and sharing a partial time of the obtained TXOP for use by the relay communication device and the plurality of second nodes.

46. The relay communication method according to claim 45, further comprising:
determining an allocation strategy of the TXOP for the relay communication device and the plurality of second nodes.

47. The relay communication method according to claim 46, wherein the allocation strategy of the TXOP is determined by the first node based on a buffer status of the relay communication device and the plurality of second nodes.

48. The relay communication method according to claim 46, wherein the allocation strategy of the TXOP is determined by the relay communication device based on a buffer status of the first node and the plurality of second nodes.

49. The relay communication method according to claim 45, wherein the sharing the partial time of the obtained TXOP for use by the relay communication device and the plurality of second nodes comprises:
the relay communication device sending an indicative signaling to the plurality of second nodes to share the partial time of the TXOP for use by at least one of the plurality of second nodes, so as to receive data sent by the at least one of the plurality of second nodes within the partial time.

50. The relay communication method according to claim 45, wherein when a channel is idle for a duration of an inter-frame space (xIFS), the first node receives data sent by the plurality of second nodes via the relay communication device, wherein a length of the xIFS is greater than a length of a Short Inter-Frame Space (SIFS), and the length of the xIFS is less than or equal to a length of a Point Coordination Function Inter-Frame Space (PIFS).

51. The relay communication method according to claim 45, wherein the scheduling comprises:
determining data to be transmitted and a receiver address (RA) or a destination address (DA) of the data to be transmitted; and
determining transmission of the data to be transmitted according to the RA or the DA.

52. The relay communication method according to claim 51, wherein a plurality of relay communication devices are provided, the RA of the data to be transmitted indicates the plurality of relay communication devices, and the DA of the data to be transmitted indicates the plurality of second nodes.

53. The relay communication method according to claim 51, wherein a plurality of relay communication devices are provided, RAs of the data to be transmitted indicates the plurality of relay communication devices, and the DA of the data to be transmitted indicates a same second node.

54. The relay communication method according to claim 51, wherein a plurality of relay communication devices are provided, the data to be transmitted comprises a plurality pieces of data to be transmitted, RAs of the plurality pieces of data to be transmitted respectively indicate the plurality of relay communication devices, and DAs of the plurality pieces of data to be transmitted respectively indicate the plurality of second nodes.

55. The relay communication method according to claim 51, wherein a plurality of relay communication devices are provided, the data to be transmitted comprises a plurality pieces of data to be transmitted, RAs of the plurality pieces of data to be transmitted respectively indicate the plurality of relay communication devices, and DAs of the plurality pieces of data to be transmitted indicate a same second node.

56. The relay communication method according to claim 55, further comprising:
the relay communication device performing data transmission with the first node before obtaining the partial time of the TXOP.

57. The relay communication method according to claim 45, further comprising:
the relay communication device performing data transmission with the first node after obtaining the partial time of the TXOP.

58. The relay communication method according to any one of claims 45 to 57, wherein the first node, the relay communication device, and the at least one second node comprise one first node, one relay communication device, and a plurality of second nodes, and the one relay communication device provides a relay service for the plurality of second nodes.

59. The relay communication method according to any one of claims 45 to 57, wherein the first node, the relay communication device, and the at least one second node comprise one first node, a plurality of relay communication devices, and one second node, and the plurality of relay communication devices provide a relay service for the one second node.

60. The relay communication method according to any one of claims 45 to 57, wherein the first node, the relay communication device, and the at least one second node comprise one first node, a plurality of relay communication devices, and a plurality of second nodes, and at least one of the plurality of relay communication devices provides a relay service for at least one of the plurality of second nodes.

61. The relay communication method according to any one of claims 45 to 57, wherein the first node, the relay communication device, and the at least one second node comprise a plurality of first nodes, one relay communication device, and one second node;
wherein the plurality of first nodes provide a relay service for the one second node through the one relay communication device;
wherein the MU-RTS-TXS TF further indicates that after one of the first nodes obtains the TXOP, a transmission between the one relay communication device and another one or more of the first nodes is scheduled and a partial time of the obtained TXOP is shared for use by the another one or more of the first nodes.

62. The relay communication method according to any one of claims 45 to 57, wherein the first node, the relay communication device, and the at least one second node comprise a plurality of first nodes, one relay communication device, and a plurality of second nodes;
wherein the plurality of first nodes provide a relay service for at least one of the plurality of second nodes through the one relay communication device;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

63. The relay communication method according to any one of claims 45 to 57, wherein the first node, the relay communication device, and the at least one second node comprise a plurality of first nodes, a plurality of relay communication devices, and one second node;
wherein the plurality of first nodes provide a relay service for the one second node through the plurality of relay communication devices;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

64. The relay communication method according to any one of claims 45 to 57, wherein the first node, the relay communication device, and the at least one second node comprise a plurality of first nodes, a plurality of relay communication devices, and a plurality of second nodes;
wherein the plurality of first nodes provide a relay service for at least one of the plurality of second nodes through the plurality of relay communication devices;
wherein the MU-RTS-TXS TF further indicates that after one of the first nodes obtains the TXOP, a transmission between the relay communication device and another one or more of the first nodes is scheduled and a partial time of the obtained TXOP is shared for use by the another one or more of the first nodes.

65. A relay communication method, performed by a first node, comprising:
receiving a Multi-User Request-to-Send Transmission Opportunity Sharing Trigger Frame (MU-RTS-TXS TF) sent by a relay communication device;
wherein the MU-RTS-TXS TF indicates that after the relay communication device obtains a transmission opportunity (TXOP), a transmission between the first node and at least one second node is scheduled and a partial time of the obtained TXOP is shared for use by the first node and the at least one second node;
wherein at least one of the first node, the relay communication device, and the at least one second node is plural in number.

66. The relay communication method according to claim 65, further comprising:
the relay communication device performing data transmission with the first node and/or the at least one second node before obtaining the TXOP.

67. The relay communication method according to claim 65, wherein the relay communication method further comprises:
the relay communication device performing data transmission with the first node and/or the at least one second node after obtaining the TXOP.

68. The relay communication method according to any one of claims 65 to 67, wherein the first node, the relay communication device, and the at least one second node comprise one first node, one relay communication device, and a plurality of second nodes;
wherein the one relay communication device provides a relay service for the plurality of second nodes.

69. The relay communication method according to any one of claims 65 to 67, wherein the first node, the relay communication device, and the at least one second node comprise one first node, a plurality of relay communication devices, and one second node;
wherein the plurality of relay communication devices provide a relay service for the one second node;
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

70. The relay communication method according to any one of claims 65 to 67, wherein the first node, the relay communication device, and the at least one second node comprise one first node, a plurality of relay communication devices, and a plurality of second nodes;
wherein at least one of the plurality of relay communication devices provides a relay service for at least one of the plurality of second nodes
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

71. The relay communication method according to any one of claims 65 to 67, wherein the first node, the relay communication device, and the at least one second node comprise a plurality of first nodes, one relay communication device, and one second node;
wherein the plurality of first nodes provide a relay service for the one second node through the one relay communication device.

72. The relay communication method according to any one of claims 65 to 67, wherein the first node, the relay communication device, and the at least one second node comprise a plurality of first nodes, one relay communication device, and a plurality of second nodes;
wherein the plurality of first nodes provide a relay service for at least one of the plurality of second nodes through the one relay communication device.

73. The relay communication method according to any one of claims 65 to 67, wherein the first node, the relay communication device, and the at least one second node comprise a plurality of first nodes, a plurality of relay communication devices, and one second node;
wherein the plurality of first nodes provide a relay service for the one second node through the plurality of relay communication devices;
wherein the MU-RTS-TXS TF further indicates that after one of the plurality of relay communication devices obtains a TXOP, a transmission between the first node and/or the at least one second node and another one or more relay communication devices is scheduled and a partial time of the obtained TXOP is shared for use by the another one or more relay communication devices.

74. The relay communication method according to any one of claims 65 to 67, wherein the first node, the relay communication device, and the at least one second node comprise a plurality of first nodes, a plurality of relay communication devices, and a plurality of second nodes;
wherein the plurality of first nodes provide a relay service for at least one of the plurality of second nodes through the plurality of relay communication devices;
wherein the MU-RTS-TXS TF further indicates that after one of the relay communication devices obtains a TXOP, a transmission between the first node and/or the at least one second node and another one or more relay communication devices is scheduled and a partial time of the obtained TXOP is shared for use by the another one or more relay communication devices.

75. A wireless communication device, comprising a processor and a memory;
wherein the memory is configured to store a computer program, and the processor is configured to call and run the computer program stored in the memory to perform the method according to any one of claims 15 to 74.
